(19) Europäisches Patentamt

European Patent Office

Office européen des brevets

(11) Veröffentlichungsnummer: **0 029 073**
**B1**

(12) **EUROPÄISCHE PATENTSCHRIFT**

(45) Veröffentlichungstag der Patentschrift: **07.12.83**

(21) Anmeldenummer: **79104577.6**

(22) Anmeldetag: **19.11.79**

(51) Int. Cl.³: **B 65 G 1/04**

(54) Warenlager zur Lagerung von Stückgütern.

(43) Veröffentlichungstag der Anmeldung:
**27.05.81 Patentblatt 81/21**

(45) Bekanntmachung des Hinweises auf die Patenterteilung:
**07.12.83 Patentblatt 83/49**

(84) Benannte Vertragsstaaten:
**BE CH DE FR GB IT LU NL SE**

(56) Entgegenhaltungen:
**AT - B - 305 143**
**CH - A - 511 165**
**DE - A - 1 556 568**
**US - A - 3 547 282**

(73) Patentinhaber: **Albert Vogelsang GmbH & Co.**
**D-5277 Marienheide-Kalsbach (DE)**

(72) Erfinder: **Hoffmann, Karl, Dipl.-Ing.**
**An der Alteburger Mühle 3**
**D-5000 Köln 51 (DE)**
Erfinder: **Vogelsang, Albert**
**D-5277 Marienheide-Kalsbach (DE)**

(74) Vertreter: **Köhne, Friedrich, Dipl.-Ing.**
**Postfach 250265 Lothringer Strasse 81**
**D-5000 Köln 1 (DE)**

Courier Press, Leamington Spa, England.

EP 0 029 073 B1

# Warenlager zur Lagerung von Stückgütern

Die Erfindung bezieht sich auf ein Warenlager zur Lagerung von Stückgütern, mit mindestens einem Regal, welches neben- und übereinander angeordnete Lagerstellen für die Stückgüter aufweist, sowie mit mindestens einem Regalbediengerät, welches zu den Lagerstellen verfahrbar und zum Be- und Entladen der Lagerstellen mit den auf Paletten ruhenden Stückgüter eingerichtet ist, wobei das Regalbediengerät mindestens eine in Richtung senkrecht zur Regalfront bewegliche Förderrichtung aufweist.

Ein Warenlager dieser Gattung ist aus der AT—B—305 143 bekannt. Diesem bekannten Warenlager ist mit anderen aus der Praxis bekannten verschiedenartigsten Warenlagerkonstruktionen gemeinsam, daß die Tiefe der Lagerstellen der betreffenden Regale von der Art des zu lagernden Stückgutes abhängig ist, d.h. auf die Abmessungen des Stückgutes beschränkt ist. In dem Warenlager kanne man also je Lagerstelle der Regale nur ein einziges Stückgut unterbringen, nicht also mehrere Stückgüter hintereinander, da man die Stückgüter, die hinter der vordersten Reihe aufgestellt sind, von dem Regalbediengerät nicht erreichen kann. Dies sei anhand eines praktischen Beispieles deutlicher hervorgehoben. Wenn man beispielsweise in einem Regal eine große Anzahl von Motoren lagern will, so ist es zwar möglich, von der Bedienungsseite des Regales aus gesehen, je Lagerstelle mehrere Motoren hintereinander im Regal abzustellen. Wenn nun aber ein ganz bestimmter Motor mit bistimmter Motornummer abgerufen werden soll, der beispielsweise zufällig in der Lagerstelle an vierter Stelle in einer Reihe steht, so muß man zunächst die drei Motoren einzeln aus der Lagerstelle des Regales ausräumen, die vor diesem bestimmten Motor stehen. Es versteht sich, daß eine solche Handhabung in einem Warenlager außerordentlich umständlich, zeitraubend und auch unübersitchtlich ist, abgesehen davon, daß es in der Praxis kaum möglich ist, eine geordnete Warenlagerhaltung durchzuführen. Selbst bei gleichartigem Stückgut, wie z.B. Waschpulverpaketen, ist es nachteilig, mehrere Pakete in Reihe senkrecht zur Bedienungsseite des Regals in einer Lagerstelle anzuordnen, weil dann in der Praxis immer wieder nur die außen bzw. bedienungsseitig liegenden Pakete ausgeräumt und jeweils durch neue ersetzt werden, die nicht erreichbaren innen liegenden Pakete dagegen zwangsläufig über lange Zeiträume in den Regalstellen verbleiben können.

Warenlager dieser Art sind in der Praxis überhaupt nicht brauchbar, wenn zahlreiche sehr unterschiedliche Stückgüter gelagert werden sollen, die noch dazu unterschiedliche Abmessungen aufweisen, was insgesamt noch zu einer sehr schlechten Raumausnutzung des Warenlagers führt.

Aus Gründen schon allein der Übersichtlichkeit besitzen die Lagerstellen der Regale für Warenlager bei Lagerung zahlreicher unterschiedlicher Stückgüter in der Praxis nur jeweils einen Abstellplatz für ein Stückgut. Dies bedeutet aber, daß das Regalvolumen im Verhältnis zu dem Volumen der Gasse, in welcher sich das Regalbediengerät bewegt, sehr klein ist, daß umgekehrt gesehen die Herstellungskosten des Warenlagers und der Raumbedarf, schon allein wegen des Erfordernisses zahlreicher Gassen und Regalbediengeräte, sehr groß sind.

Der vorliegenden Erfindung liegt die Aufgabe zu grunde, ein Warenlager zu schaffen, welches bei verhältnismäßig geringem Bauaufwand und bei guter Raumausnutzung gestattet, in jeder Lagerstelle des Regales eine ganze Reihe von Stückgütern beliebig hintereinander abzustellen, wobei dennoch jedes einzelne Stückgut unbehindert durch die Stückgüter der betreffenden Reihe aus dem Warenlager entnommen bzw. an einem freien Stellplatz des Warenlagers abgestellt werden kann.

Die gestellte Aufgabe wird erfindungsgemäß dadurch gelöst, daß jede Lagerstelle eine Tiefe zur Aufnahme einer Reihe von Stückgütern aufweist, daß der Fördervorrichtung mindestens ein zusätzlicher Querförderer zugeordnet ist, der zur Entnahme eines Stückgutes aus der an der Lagerstelle herausgezogenen Stückgutreihe dient, wobei die die Stückgüter tragenden Paletten in ihrer Länge der Tiefe des Regals entsprechen. Auf diese Weise ergibt sich der wesentliche Vorteil, daß eine Reihe von Stückgütern, die gegebenenfalls auf einzelnen Paletten stehen können, auf einer gemeinsamen Trägerpalette gesammelt werden kann. Dadurch ist nicht nur eine große Tiefe der Regale möglich, sondern man kann auch jedes einzelne Stückgut, gleichgültig an welcher Stelle sich dieses auf der Palette befindet, erreichen. Dabei ist es leicht möglich, bei Bedarf das Stückgut zu kommissionieren.

Eine besonders vorteilhafte Ausgestaltung der Erfindung ergibt sich dadurch, daß jede Palette mit dem darauf befindlichen Stückgut als Ladeeinheit derart eingerichtet ist, daß sie auf Rollenbahnen sowohl innerhalb des Warenlagers als auch auf Fahrzeugen außerhalb des Warenlagers förderbar ist. Auf diese Weise wird der Vorteil erzielt, daß die Paletten bzw. Trägerpaletten nicht mehr ständig umgeladen zu werden brauche, sondern auf dem gesamten Transportweg beladen bleiden können.

Weitere vorteilhafte Ausgestaltungen der Erfindung ergeben sich aus den Unteransprüchen sowie aus der nachfolgenden Zeichungsbeschreibung.

In der Zeichnung sind Ausführungsbeispiele der Erfindung im Schema dargestellt, und zwar zeigen

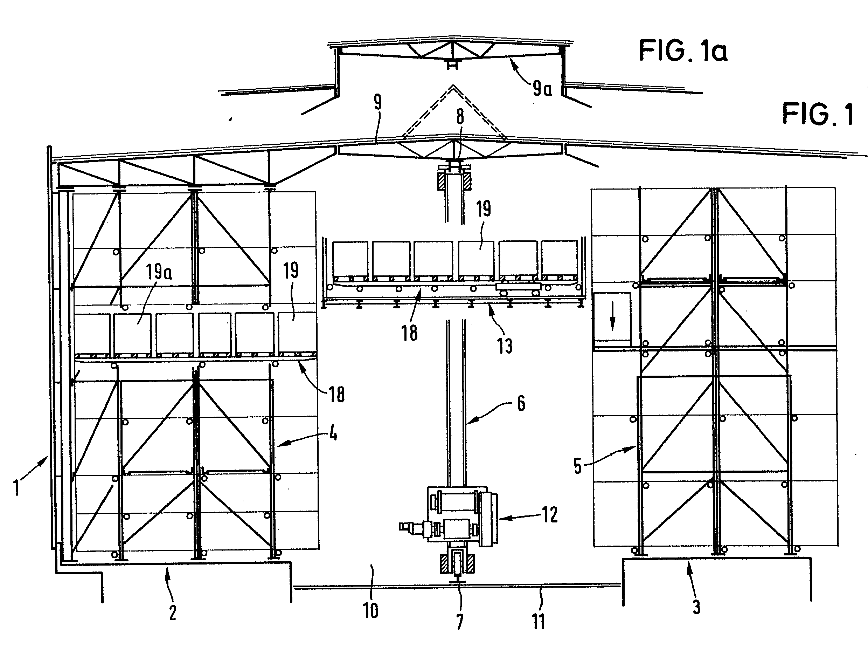

Fig. 1 einen Vertikalschnitt durch ein Warenlager mit zwei beiderseitig einer Gasse angeordneten Regalen, wobei in der Gasse ein Regalbedienungsgerät vorgesehen ist,

Fig. 1 a eine Einzelheit einer anderen Dachkonstruktion für das Warenlager,

Fig. 2 eine Draufsicht auf ein Warenlager,

Fig. 3 eine Draufsicht auf ein Teil eines Warenlagers in vergrößerter Darstellung,

Fig. 4 einen Vertikalschnitt durch einen Hubschlitten eines Regalbediengerätes,

Fig. 5 eine Draufsicht auf den Hubschlitten gemäß Fig. 4,

Fig. 6 einen Vertikalschnitt durch einen Hubtisch,

Fig. 7 einen Teilschnitt gemäß Schnittlinie VII—VII in Fig. 6,

Fig. 8 eine Draufsicht auf den Hubtisch gemäß Fig. 6,

Fig. 9 einen vereinfachten Teilschnitt gemäß Schnittlinie IX—IX in Fig. 8, wobei jedoch der Hubtisch mittels Teleskopgabeln im Bild nach unten hin verschoben gezeichnet ist,

Fig. 10 weitere Teilvertikalschnitte zu dem Hubtisch gemäß Fig. 8,

Fig. 11 eine Seitenansicht, teils im Schnitt, einer Abtriebsvorrichtung,

Fig. 12 eine Draufsicht hierzu,

Fig. 13—15 weitere konstruktive Einzelheiten,

Fig. 16 eine Vorderansicht eines Regalbediengerätes,

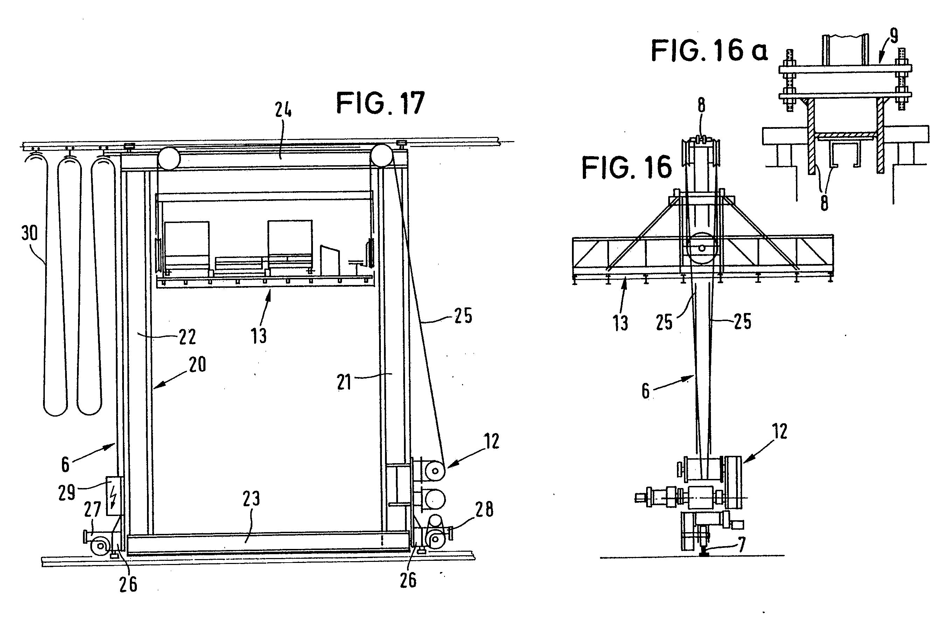

Fig. 16 a eine Einzelheit bezüglich des oberen Endes des Regalbediengerätes in vergrößertem Maßstab,

Figur 17 eine Seitenansicht des Regalbediengerätes gemäß Figur 16,

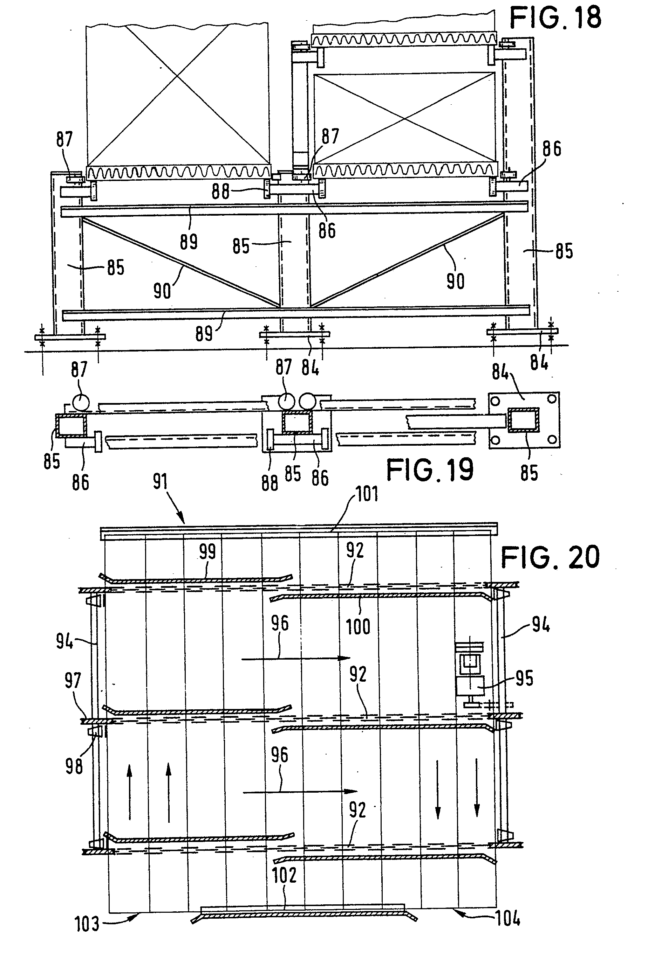

Figur 18 eine Vorderansicht auf ein Teil eines Regales,

Figur 19—21 weitere konstruktive Einzelheiten,

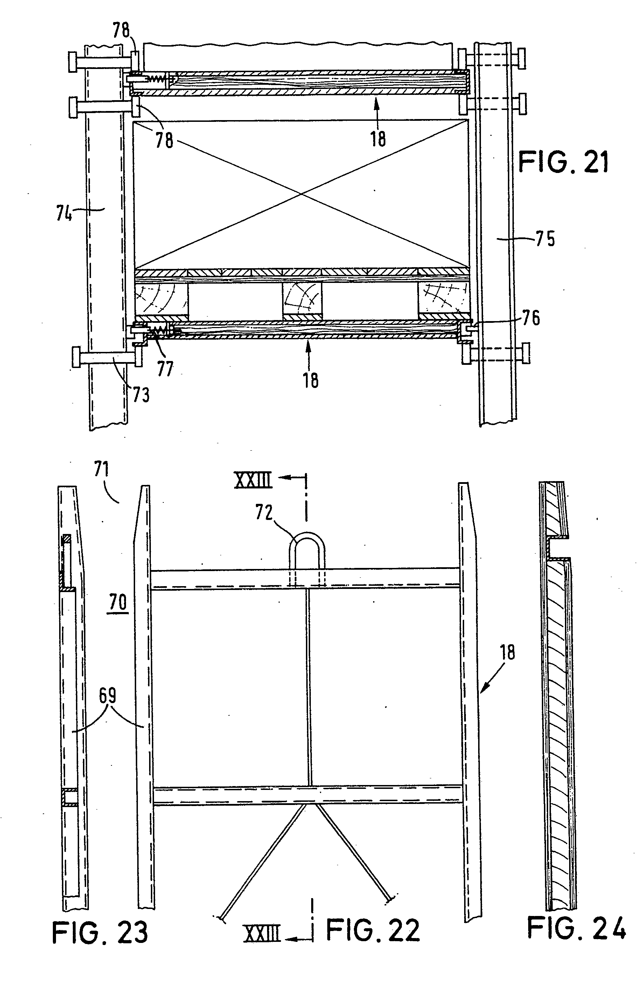

Figur 22 eine Draufsicht auf einen Teil einer Lagerumlaufpalette,

Figur 23 einen Längsschnitt hierzu gemäß Schnittlinie XXIII—XXIII,

Figur 24 einen Teillängsschnitt durch eine Lagerumlaufpalette in einer anderen Konstruktionsausführung,

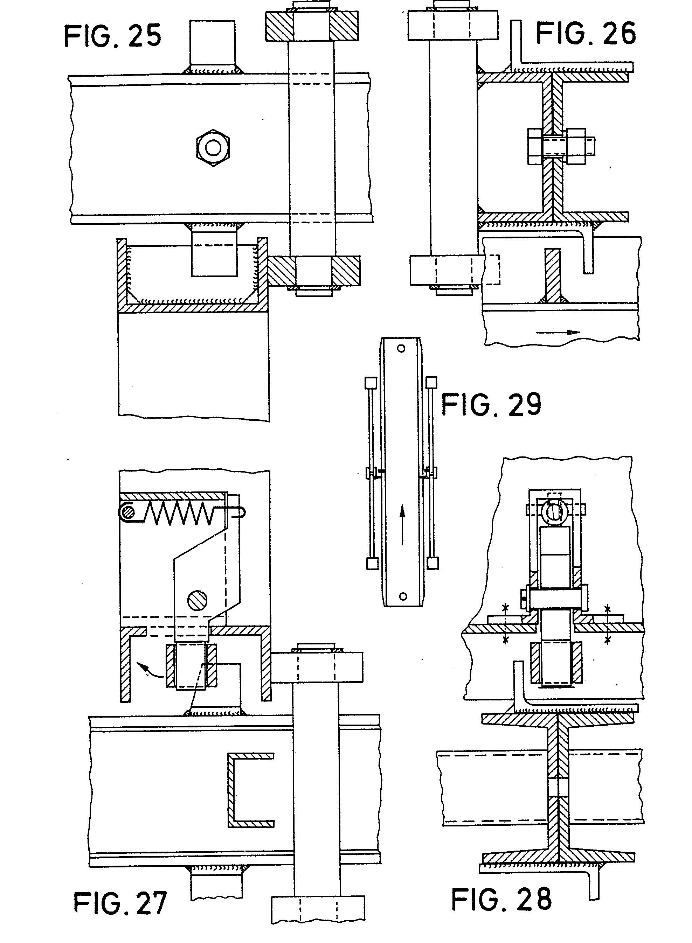

Figur 25—29 Konstruktionseinzelheiten bezüglich der Haltevorrichtungen für die Lagerumlaufpaletten im Regal,

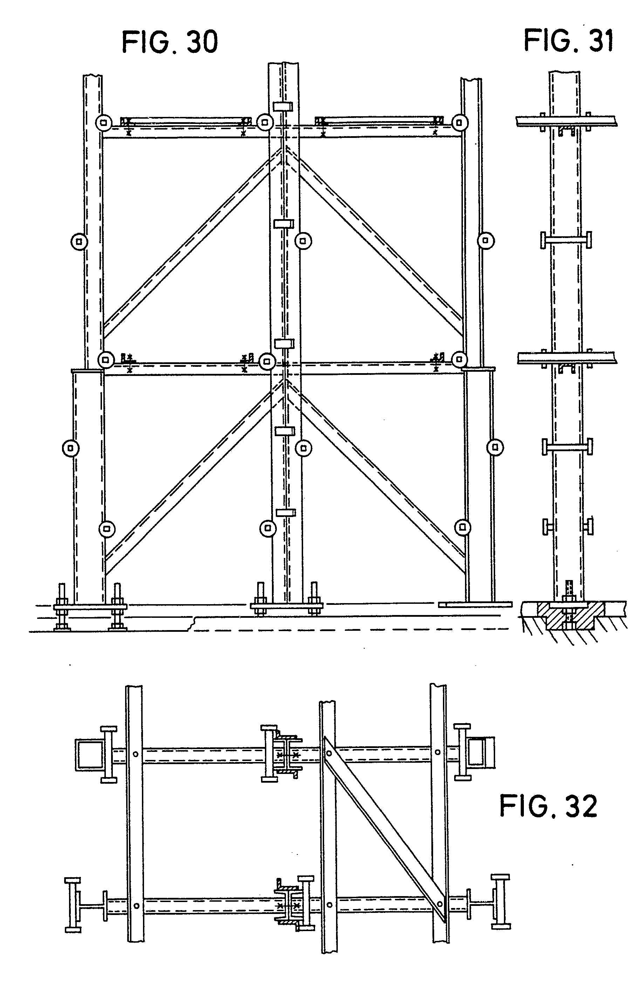

Figur 30 eine Teilseitenansicht auf ein Regal,

Figur 31 einen Vertikalschnitt zu Fig. 30,

Figur 32 einen Horizontalschnitt zur Figur 30,

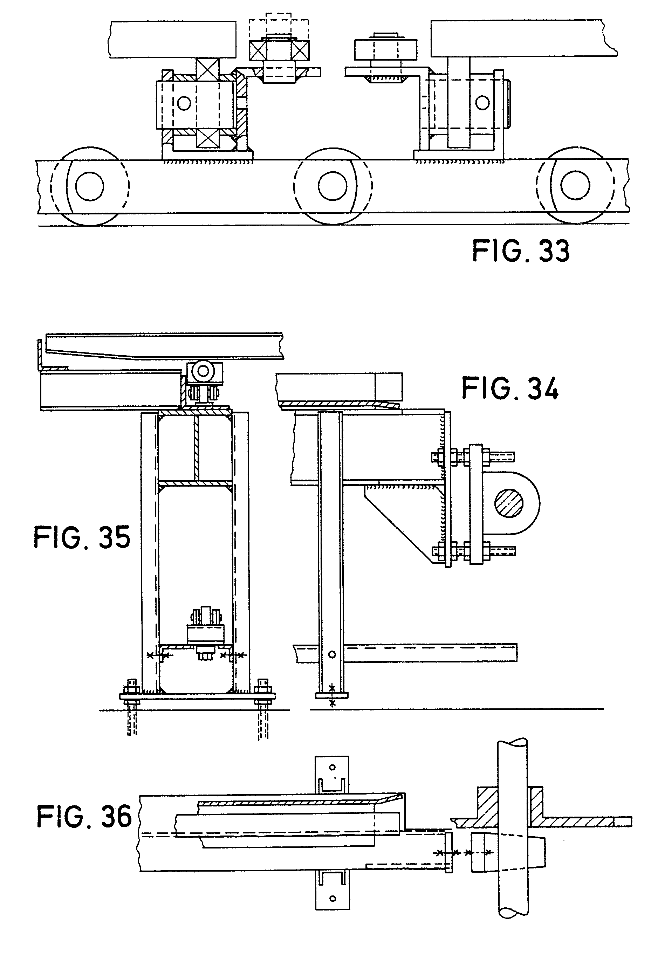

Figur 33—36 Konstruktionseinzelheiten des Regales,

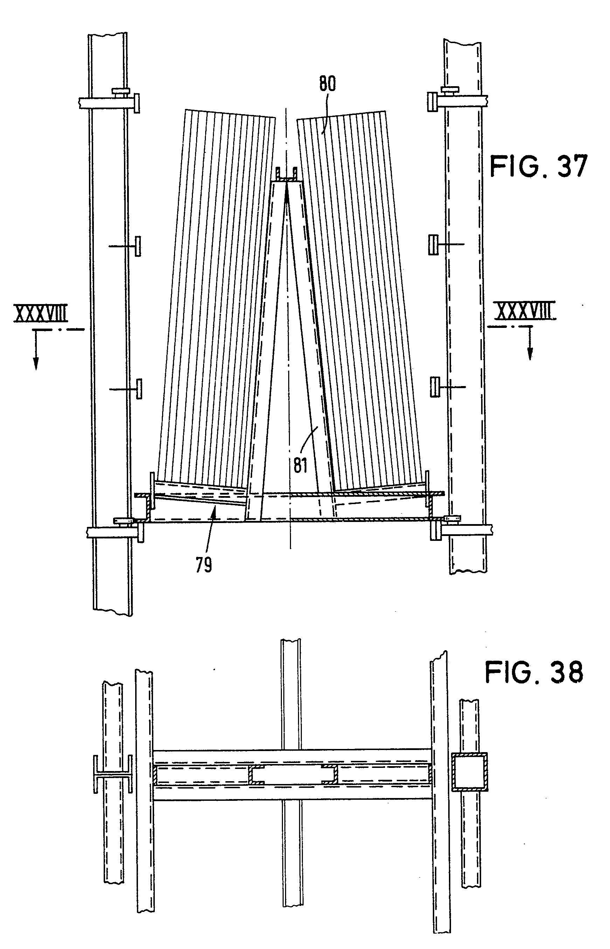

Figur 37 eine Vorderansicht auf eine andere Konstruktion einer Lagerumlaufpalette, welche sich im Regal befindet,

Figur 38 einen Teilhorizontalschnitt gemäß Schnittlinie XXXVIII—XXXVIII in Figur 37,

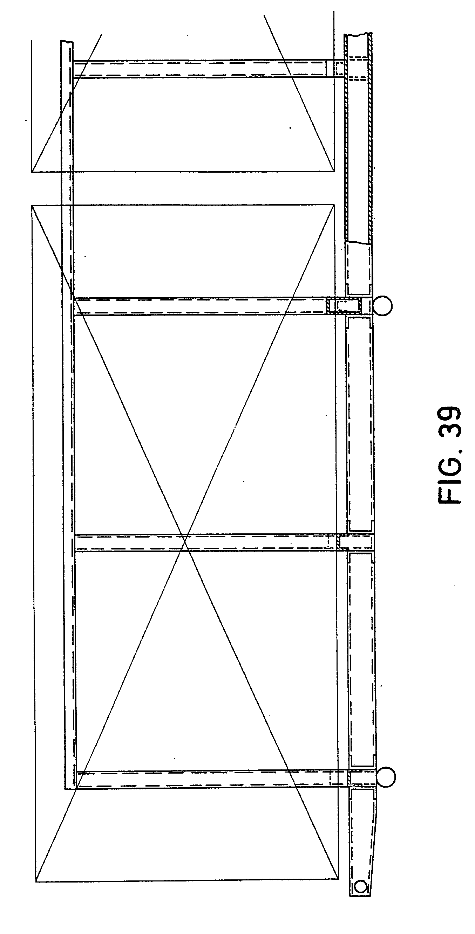

Figur 39 eine Teilseitenansicht, teils im Vertikalschnitt zu der Lagerumlaufpalette gemäß Figur 37,

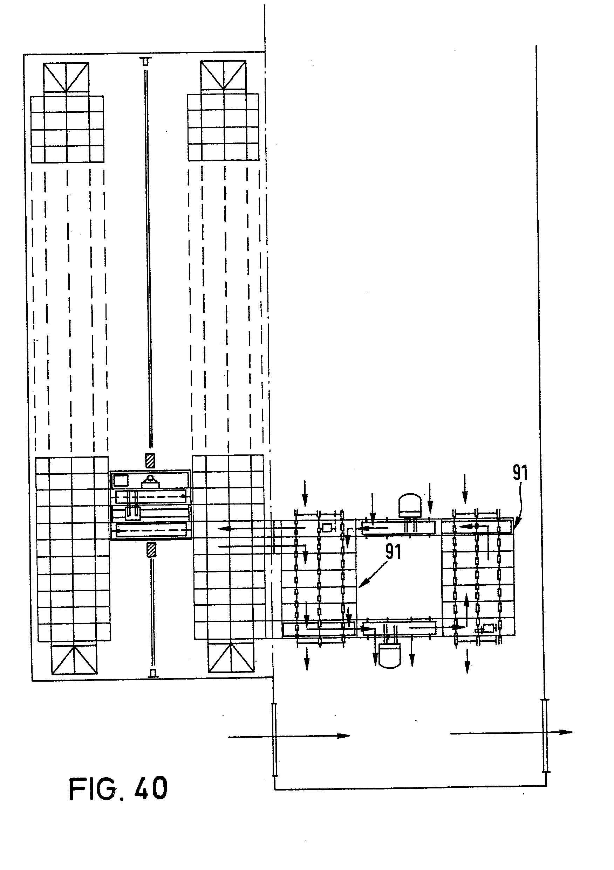

Figur 40 eine Draufsicht auf eine andere Gestaltung eines Warenlagers,

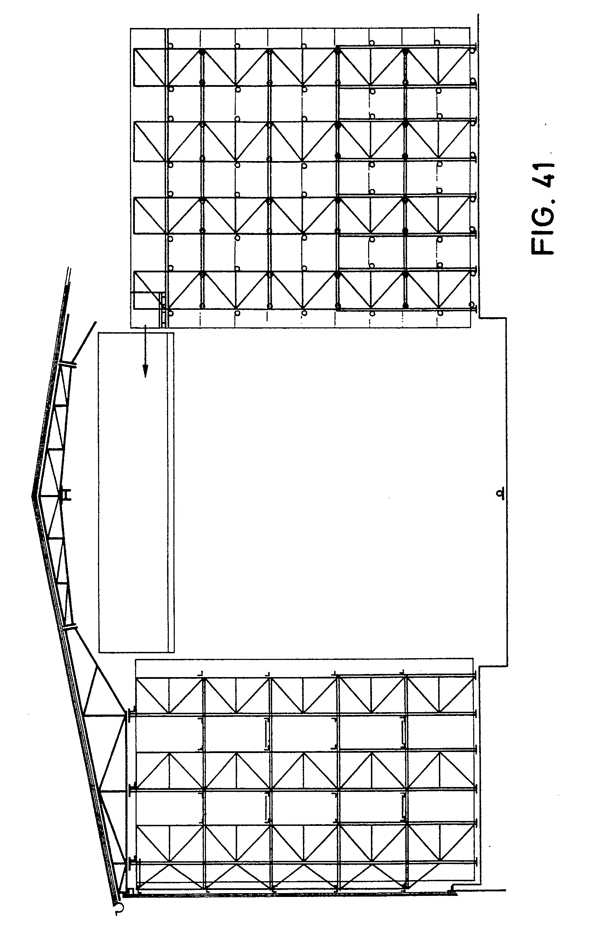

Figur 41 ein weiteres Warenlager in Seitenansicht,

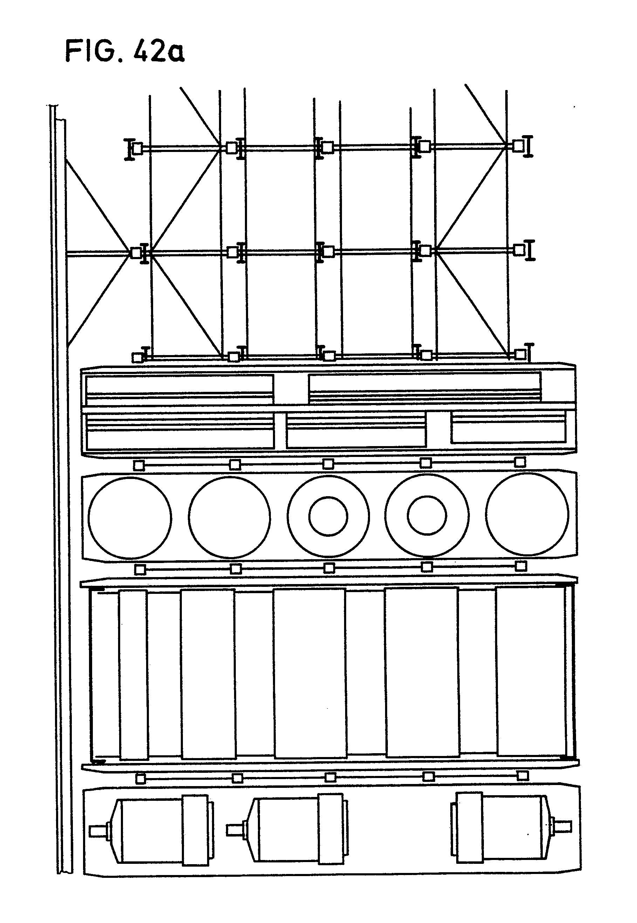

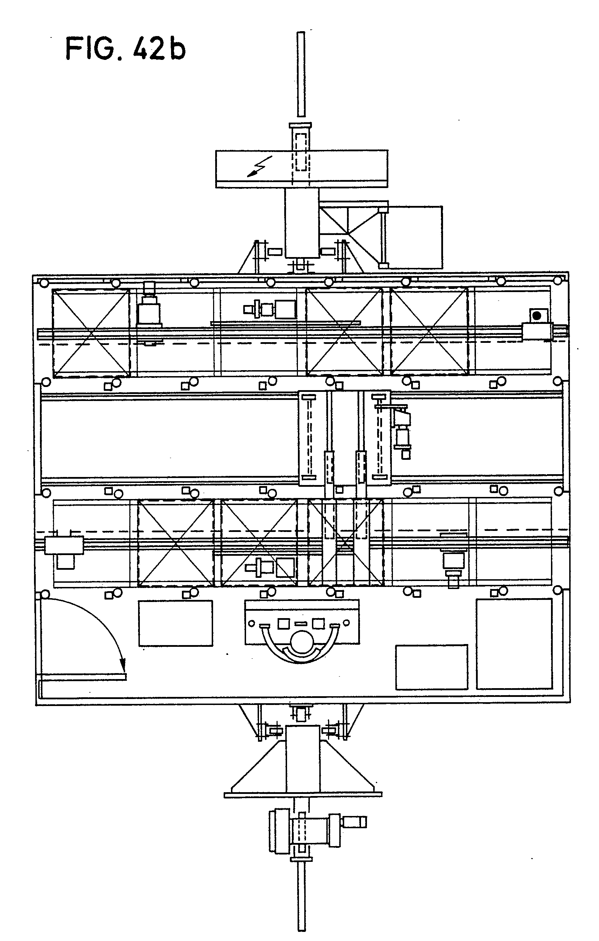

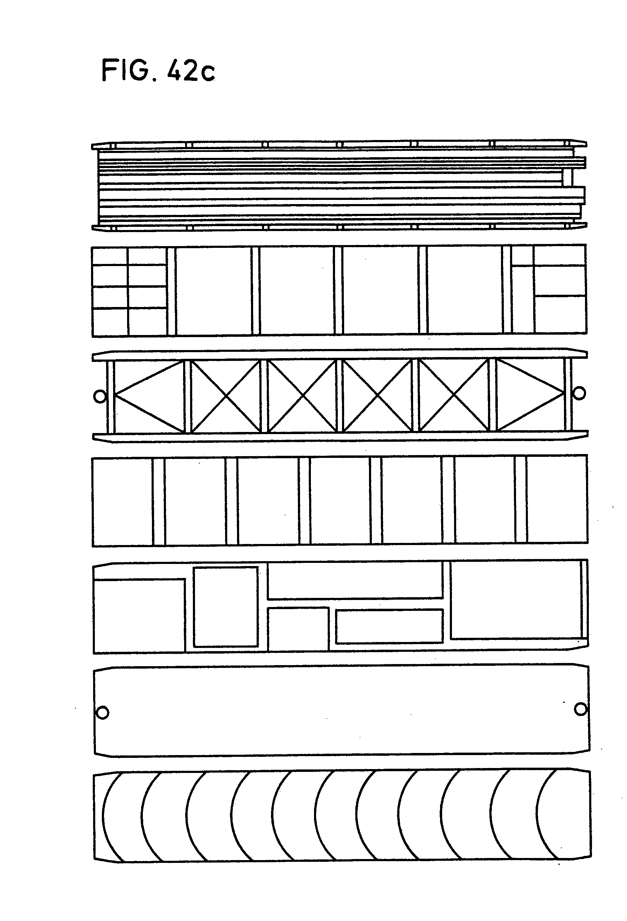

Figur 42a, 42b, 42c in dieser Reihenfolge zusammengehörige Draufsichten auf Regale zu beiden Seiten eines Regalbediengerätes mit Veranschaulichung der Lagerung unterschiedlicher Stückgutarten.

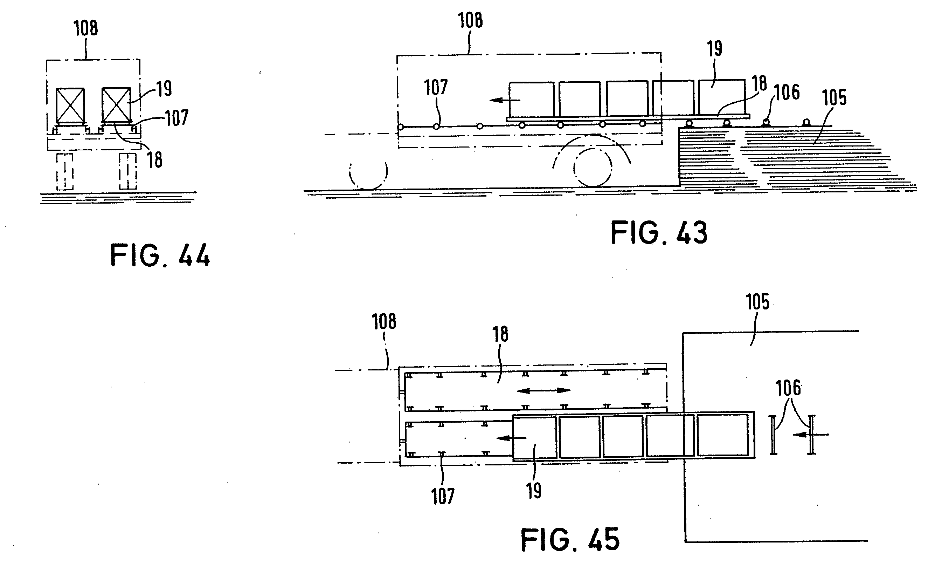

Figur 43 eine Seitenansicht einer Trägerpalette bei der Übergabe von einer Rollenbahn des Warenlagers zu einer Rollenbahn auf einem Lastkraftwagen,

Figur 44 eine Seitenansicht zu Figur 43 und

Figur 45 eine Draufsicht zu Figur 43.

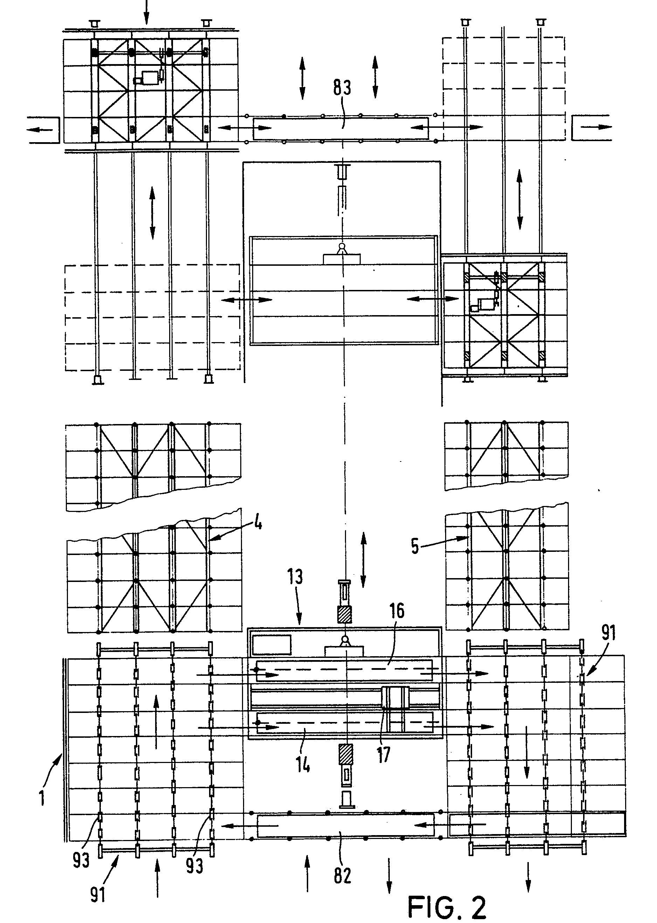

Die Figuren 1, 1a, 2 vermitteln zunächst einen Überblick über ein Ausführungsbeispiel eines erfindungsgemäßen Warenlagers in einem Gebäude 1, welches von einer Dachkonstruktion 9 überdeckt ist und welches zwei parallel zueinander verlaufende Regale 4 und 5 aufweist, die ziwschen sich eine Gasse 10 bilden. In dieser Gasse 10 ist ein Regalbediengerät 6 verfahrbar angeordnet, und zwar ist dieses Gerät mittels Fahrrollen auf einer am Boden 11 befestigten Fahrschiene 7 bodenfahrend ausgebildet und am oberen Ende an einer an der Dachkonstruktion 9 befestigten Führungsschiene 8 geführt. Zur besseren Ausnutzung des Raumes des Warenlagergebäudes kann die Dachkonstruktion 9a, gemäß Figur 1a, im Bereich über dem Regalbediengerät höher gesetzt werden, damit der nachfolgend noch im einzelnen beschriebene Hubschlitten 13 möglichst weit nach oben fahren kann. Damit der Raum des Warenlagergebäudes auch nach unten hin möglichst weitgehend ausgenutzt werden kann, ist der Boden 11 im Bereich des Regalbediengerätes tiefer als der Boden 2 bzw. 3 im Bereich der Regale 4, 5 vorgesehen. Der Antrieb des Regalbediengerätes ist mit 12 bezeichnet und wird weiter unten ausführlich erläutert.

Wie die Figuren 1 und 2 weiterhin verdeutlichen, besitzt das Regalbediengerät mindestens eine und in Rechnung senkrecht zur Regalfront bewegliche Fördervorrichtung, und zwar in dem gezeichneten Ausführungsbeispiel zwei Fördervorrichtungen 14, 16. Hierzu ist ein Querförderer 17 vorgesehen. Bei zwei parallel zueinander verlaufenden Fördervorrichtungen 14, 16 ist der Querförderer 17 mit Vorteil zwischen diesen verfahrbar, und zwar über die gesamte Länge dieser Fördervorrichtungen.

Aus den beiden Übersichtszeichnungen gemäß Figur 1 und 2 ergibt sich bereits das Grundprinzip des erfindungsgemäßen Warenlagers, und zwar erkennt man aus Figur 1, daß eine einzige Lagerumlaufpalette, z.B. die Palette 18, mehrere hintereinander angeordnete Stückgüter, z.B. gemäß Figur 1 sechs Stückgüter 19, aufnehmen kann. Das Regalbediengerät wird an einem geeigneten Ort, wie weiter unten erläuterte Ausführungsbeispiele noch zeigen werden, mit einer Lagerumlaufpalette als Trägerpalette und dem darauf befindlichen Stückgut beschickt, so daß das Regalbediengerät eine Lagerstelle eines Regales anfahren und die Lagerumlaufpalette mittels einer Ubergabevorrichtung in die Lagerstelle einschieben kann, wie z.B. in Figur 1 im mittleren Bereich des Regales 4 gezeigt ist. Wenn nun aus dieser Stückgutreihe ein einzelnes Stück, z.B. 19a, ausgelagert werden soll, so fährt das Regalbediengerät so vor die betreffende Lagerstelle, daß ein Übergabevorrichtung zunächst die gesamte Lagerumlaufpalette 18 auf das Regalbediengerät zieht. Sodann fährt der Querförderer 17 seitlich neben das Stückgut 19a. Auch der Querförderer ist mit einer Übergabevorrichtung ausgestattet, so daß das Stückgut 19a ohne Veränderung der Stellung der übrigen Stückgüter zunächst auf den Querförderer 17 und gegebenenfalls auf die weitere daneben befindliche Fördervorrichtung 16 geschoben werden kann. Die Lagerumlaufpalette kann nun wieder an die Lagerstelle zurückgeschoben werden.

Zur Verwirklichung des vorerläuterten Prinzips umfaßt das erfindungsgemäße Warenlager außer den auf die gewünschte Kapazität des Warenlagers abgestimmten Regalen und dem oder den Regalbediengeräten auch noch eine Anzahl Lagerumlaufpaletten sowi gegebenenfalls noch weitere Einzelpaletten für das Stückgut und schließlich umfaßt das Warenlager die Materialflußanlage, wie weiter unten noch näher erläutert wird.

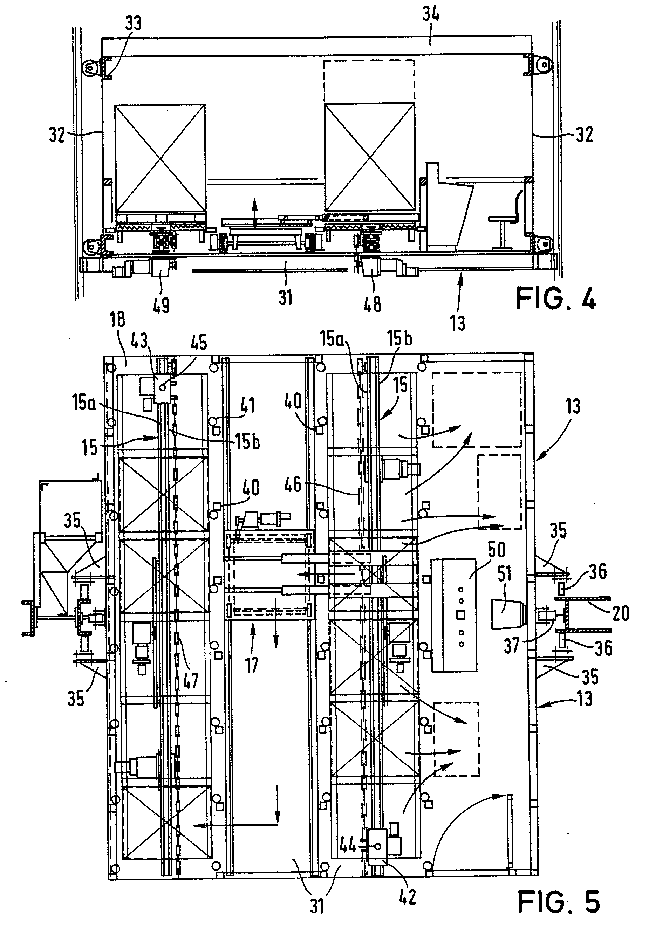

Die Figuren 1 bis 12 und 16, 16a und 17 veranschaulichen Ausführungsbeispiele für Regalbediengeräte, wobei bemerkt wird, daß für gleichartige Teile in den einzelnen Figuren jeweils gleiche Bezugszeichen verwendet worden sind. Wie besonders die Figuren 16 und 17 verdeutlichen, besteht eine Regalbdediengerät vorteilhafterweise aus folgenden Baugruppen: einem Rahmen, einem Fahrschemel, einem Hubschlitten, einem Hubwerk un der elektrischen Ausrüstung. Der Rahmen 20 als solcher weist einen Hauptmast 21 und einen Hilfsmast 22 auf, die am unteren Ende durch einen Fahrträger 23 und am oberen Ende durch einen Kopfträger 24 miteinander starr verbunden sind. Der Hauptmast 21 trägt die Hubwerkonsolkonstruktion bzw. den Antrieb 12 für das Regalbediengerät. Der Antrieb umfaßt einmal ein Hubwerk mit angetriebenen Seilrollen, die zum Auf und Abwickeln von Teilen 25 dienen, an welchen der Hubschlitten 13 hängt. Ferner umfaßt der Antrieb ein elektrisches Fahrwerk zum Verfahren des Regalbediengerätes entlang der unteren Fahrschiene 7 über die gesamte Länge der betreffenden Gasse. Zur Anbringung des Fahrwerkes besitzt jeder Mast 21, 22 außen eine Platte 26 zum Aufschrauben der Fahrschemel 27, 28. Am Hilfsmast 22 ist ein Schaltschrank 29 für die Unterbringung der elektrischen Ausrüstung angeordnet. Die Versorgung mit Strom erfolgt über ein Schleppkabel 30, dessen Schleifen in geeigneter Weise an der oberen Führungsschiene 8 verschiebbar gehalten sind.

Je nach baulichen Gegebenheiten wird an einem der beiden Maste eine nicht gezeichnete Leiter angebracht, damit der Hubschlitten 13 in jeder Höhenlage von der Bedienungsperson verlassen bzw. bestiegen werden kann.

Innerhalb der Maste 21, 22 befinden sich Aufzugsschienen für seitliche Stützrollen, die am Hubschlitten 13 angebracht sind. Außerdem wirken die Aufzugsschienen mit einer Hubschlitten-Fangvorrichtung zusammen. Der Übersichtlichkeit halber ist die Fangvorrichtung nicht im enzelnen zeichnerisch dargestellt. Die Fangvorrichtung besteht im wesentlichen aus einem Fangseil mit Regler, wobei das Fangseil mit einem Gegengewicht gespannt wird. Zur erleichterten Wartung der Fangvorrichtung ist diese an dem Mast angeordnet, der mit einer Leiter ausgestattet ist, so daß besonders die Wartung des oben angebrachten Reglers ohne Schwierigkeit von der Leiter aus erfolgen kann.

Jeder Fahrschemel 27, 28 besteht im wesentlichen aus einer geschweißten Kastenprofilkonstruktion und trägt die Laufräder ohne Spurkranz in wälzgelagerten Ecklagern, die mit Lagerdeckeln versehen sind. Das nicht angetriebene Laufrad weist exzentrische Lagerdeckel auf. Durch Drehen einer Schraubenteilung kann der betreffende Mast in einer Richtung geschwenkt und in die Lotrechte gestellt werden. An der Unterseite sind zwei horizontale Führungsrollen mit Exzenterbolzen mittels Klötzen befestigt. Durch Drehen der Exzenterbolzen werden die Führungsrollen näher an den Kopf der Fahrschiene herangebracht, so daß auf diese Weise das Spiel verkleinert werden kann. Eines der Laufräder wird vorteilhafterweise über eine verlängerte Welle direkt angetrieben.

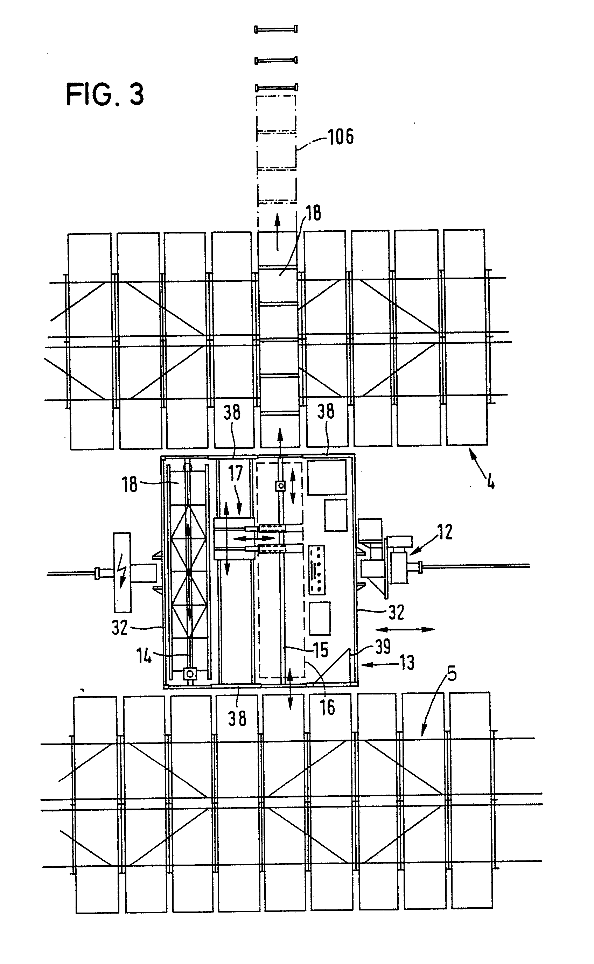

Der Hubschlitten 13 ist besonders deutlich aus den Figuren 3 bis 5 zu ersehen. Der Hubschlitten besteht im wesentlichen aus folgenden Bauteilen: einer Bodenkonstruktion mit Belagelementen, Seitenteilen mit oberem Rahmen, stirnseitigen Geländern, Schlittenführungen, einer Fangvorrichtung, Aufbauteilen, Übergabevorrichtungen, Rollenböcken, einem fahrbaren Hubtisch mit Teleskopgabeln und einem Steuerstand. Die Belagelemente sind zweckmäßig parallel zur Fahrtrichtung auf längslaufenden Trägern angeordnet. Die Oberfläche wird aus rutschfestem Blechbelag hergestellt. Zwischen den Trägern sind unter den Belagblechen Flachrippen eingeschweißt, die zur Verstärkung der Bodenkonstruktion 31 dienen. Bei der Montage werden die vorerläuterten Teile zu einer Plattenkonstruktion zusammengeschraubt.

Die Seitenteile 32 mit oberem Rahmen 33 sind als tragende Konstruktionsteile im ganzen hergestellt und werden auf die Bodenkonstruktion 31 an beiden Enden aufgesetzt und mit diesen verschraubt. Die obere Verbindung dieser beiden Seitenteile erfolgt mit einem aufgesetzten Gitterträger 34 zur Ergänzung des oberen Rahmens. Bei Verwendung von Seiltrieb, wie zu den Figuren 16 und 17 beschrieben wurde, ist an jeder Seite eine großdimensionierte Seilumlenkrolle an den Seitenteilen gelagert. Der Hubschlitten hängt vorzugsweise in vier Seilen.

An den Seitenteilen sind konsolartige Platten 35 befestigt, welche Führungsrollenböcke mit Führungsrollen 36 tragen. Außerdem sind weitere Führungsrollenböcke mit Führungsrollen 37 stirnseitig zu dem Rahmen 20 gelagert, und zwar sind die Führungsrollenböcke zweckmäßigerweise in Schraubspindeln leicht nachstellbar befestigt, so daß die Rollen an den Rahmenvorderkanten entlanggeführt werden.

Wie insbesondere Figur 3 verdeutlicht, sind zwischen den Seitenteilen 32, und zwar nach den Regalen zu Geländer 38 vorgesehen, welche an den Stellen unterbrochen sind, an denen die Langumlaufpaletten 18 auf die Bühne gezogen werden. Auf einer Seite ist zweckmäßigerweise eine Zugangstür 39 vorgesehen.

Weiter oben wurde bereits darauf hingewiesen, daß das Regalbediengerät mit einer Fangvorrichtung ausgestattet ist. Teil dieser Fangvorrichtung ist je ein Fangklotz, welcher gegenüber den beiden Masten des Rahmens des Regalbediengerätes an den Unterseiten der Bühne des Hubschlittens angeordnet ist. Jeder Fangklotz umgreift die betreffende Aufzugsschiene des Mastes. Eine Fangrolle an jeder Seite wird mit Fanggestänge über eine Fangwelle mit dem Fangseil verbunde, welches bei Überschreiten einer eingestellten Senkgeschwindigkeit mit Hilfe des Reglers das Fangseil klemmt und die Fangrollen in dem keilförmigen Fangklotz gegen die Schiene drückt.

Zu den weiter oben erwähnten Aufbauteilen des Hubschlittens gehören Rollenböcke zur Lagerung von Laufrollen 40 und Führungsrollen 41 für die Aufnahme der Lagerumlaufpaletten, und zwar sind diese Rollen auf beiden Seiten der Lagerumlaufpaletten 18 bzw. 16 vorgesehen. Durch diese Rollen und die besondere Konstruktion der Lagerumlaufpaletten, die weiter unten noch näher beschrieben ist, kann eine exakte Einführung in die gewählte Lagerstelle des Regals durchgeführt werden.

Auf dem Hubschlitten befinden sich im vorliegenden Ausführungsbeispiel zwei Fördervorrichtungen 14, 16, die zur Übergabe der Lagerumlaufpaletten vom Hubschlitten zu den Lagerstellen des Regals und umgekehrt dienen. Gemäß einem in der Zeichnung (Fig. 3 bis 5) dargestellten konstruktiven Ausführungsbeispiel besitzt jede Übergabevorrichtung zwei zusammengesetzte C-Profile 15 mit den Profilteilen 15a, 15b, zwischen welche Kunststoffgleiter eingesetzt sind. An der Oberseite jedes Kunststoffgleiters ist ein kurzer Schlitten 42 bzw. 43 mit einem z.B. durch Elektromagnet einziehbaren Dorn 44, 45. Der kurze Schlitten wird mittels eines Kettenantriebes 46 bzw. 47 über die ganze Länge der Kunststoffprofile 15 hin- und herbewegt. Der zugehörige Getriebemotor 48, 49 ist zweckmäßigerweise unterhalb der Bühne angeordnet. Dieser Getriebemotor kann auch auf dem zwischen die Kunststoffprofile eingesetzten Kunststoffgleiter unter Zwischenschaltung einer Platte befestigt werden, so daß er mitlaufen kann. Zusätzlich wird mit einem anderen auf der Bühne befestigten Antrieb oder durch Umsteuern des Kettenantriebes das Doppel-C-Profil 15 selbst hin- und herbewegt, so daß sich eine Differenzbewegung von Bühnenaußenkante bis zur Stelle unterhalb der Öse der betreffenden Lagerumlaufpalette ergibt.

Die Wirkungsweise der vorerläuterten Hubschlittens 13 ist im wesentlichen folgende. Von einem Steuerstand 50 mit Sitz 51 für die Bedienungsperson wird die Doppel-C-Profilschiene mit ausgesetztem Schlitten und bei eingezogenem Dorn ganz ausgefahren. Die jeweiligen Endlagen sind elektrisch und mechanisch einstellbar begrenzt, so daß in bezug auf alle Lagerstellen der Regale alle Ausfahrwege gleiche sind und die Lagerumlaufpaletten gleichmäßig ins Regal gefahren werden können und auch beim Abholen bzw. zum Herausziehen aus dem Regal gleichmäßig unterfahren werden können. In der jeweiligen Endlage wird der Dorn vertikal ausgefahren und in ein Loch oder in eine Öse der Lagerumlaufpalette eingeführt und damit eine Zugoder Schubverbindung hergestellt. Mittels des Kettenantriebes oder gegebenenfalls eines Zahnstangenantriebes wird der kurze Schlitten 42 bzw. 43 mit der angehakten Lagerumlaufpalette über die ganze Länge des Profiles 15 gefahren und diese Profilschiene in Mittellage auf der Bühne des Hubschlittens gebracht. Wenn diese Einzelbewegungen abgeschlossen sind, ist eine Lagerumlaufpalette aus dem Regal auf die richtige Stellung der Bühne gezogen. Wenn später die Lagerumlaufpalette in der Aufnahmerichtung wieder abgegeben werden soll, bleibt der Dorn 44, 45 in Verbindung mit der Palette. Soll jedoch entgegengesetzt der Aufnahmerichtung abgegeben werden, wird der Dorn eingezogen, der Schlitten 42 bzw. 43 unterhalb der Lagerumlaufpalette an das andere Ende gefahren und dort wieder durch Ausfahren des Dorns mit der Lagerumlaufpalette verhakt, in diesem Falle aber mit dem anderen Ende der Lagerumlaufpalette.

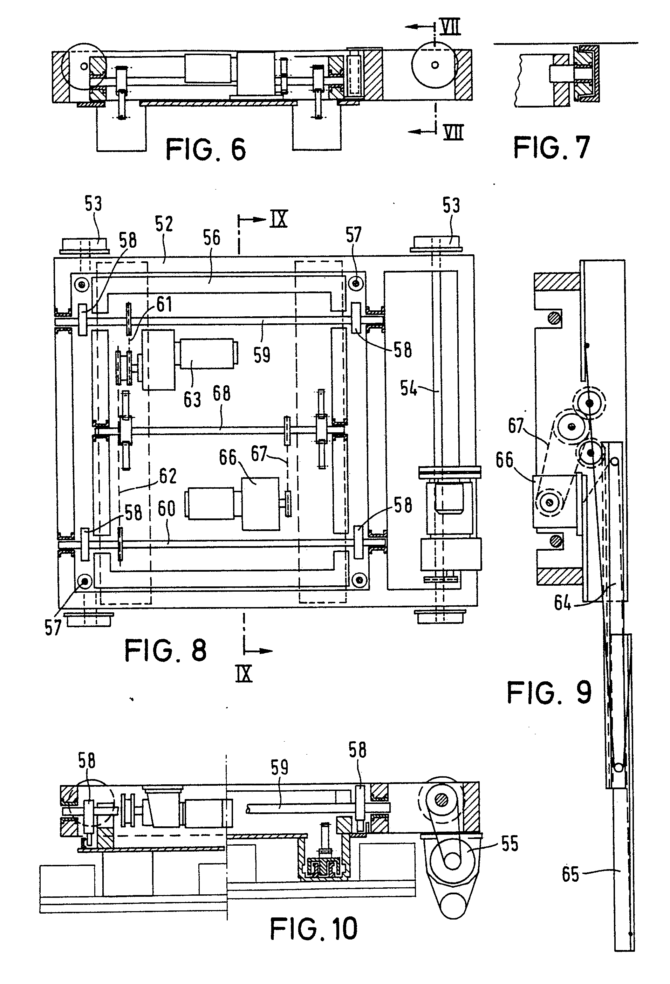

Wie weiter oben bereits ausgeführt, besitzt der Hubschlitten außer den beiden parallel und mit Abstand zueinander verlaufenden Fördervorrichtungen 14, 16, die, wie beschrieben, als Übergabevorrichtungen dienen, einen Querförderer 17, der zwischen den beiden vorgenannten Fördervorrichtungen verfahrbar ist. Dieser Querförderer 17 ist gemäß dem in der Zeichnung dargestellten Ausführungsbeispiel als fahrbarer Hubtisch ausgebildet. Hierzu wird insbesondere auf die Figuren 6 bis 15 verwiesen. Der fahrbare Hubtisch besteht im wesentlichen aus einem Fahrrahmen, einem Hubrahmen, dem Fahrantrieb mit Laufrädern, einem Hubwerk mit Führungen und Teleskopgabeln mit Antrieb. Der Fahrrahmen 52 trägt die Laufräder 53, die mit geringem Spiel in U-Profilschienen laufen, damit der Hubtisch nicht bei außenmittriger Lastaufnahme kippen kann. Ein Laufradpaar wird über eine durchgehende Welle 54 durch Antrieb 55 angetriben. Der Hubrahmen 56 hängt in Führungen 57 des Fahrrahmens 52 und wird z.B. mittels beiderseits geführten Exzentern 58 in jeder Ecke über Wellen 59, 60 sowie Ketten 61, 62 vonseiten eines eigenen Antriebes 63 auf und ab bewegt.

Der fahrbare Hubtisch ist mit Teleskopgabeln 64, 65, vorzugsweise mit einem mit Abstand und parallel zueinander verlaufenden Teleskopgabelpaar, welches über einen weiteren Antrieb 66 unter Zwischenschaltung von Zahnrädern, Ketten 67, einer Welle 68 sowie weiteren Zahnrädern und Zahnstangen nach beiden Richtungen ausfahrbar sind. Der Unterteil der Teleskopgabel ist am Hubrahmen befestigt, der Mittelteil trägt die Zahnstange und an den Enden befinden sich angetriebene Kettenräder. Ein Ausführungsbeispiel vermittelt insbesondere Figur 9. Das Oberteil wird mit doppelter Geschwindigkeit über je eine Kette nach jeder der beiden Richtungen hin ausgezogen. Die Mittellage der Teleskopgabeln ist eindeutig definiert und wird elektrisch und mechanisch überwacht.

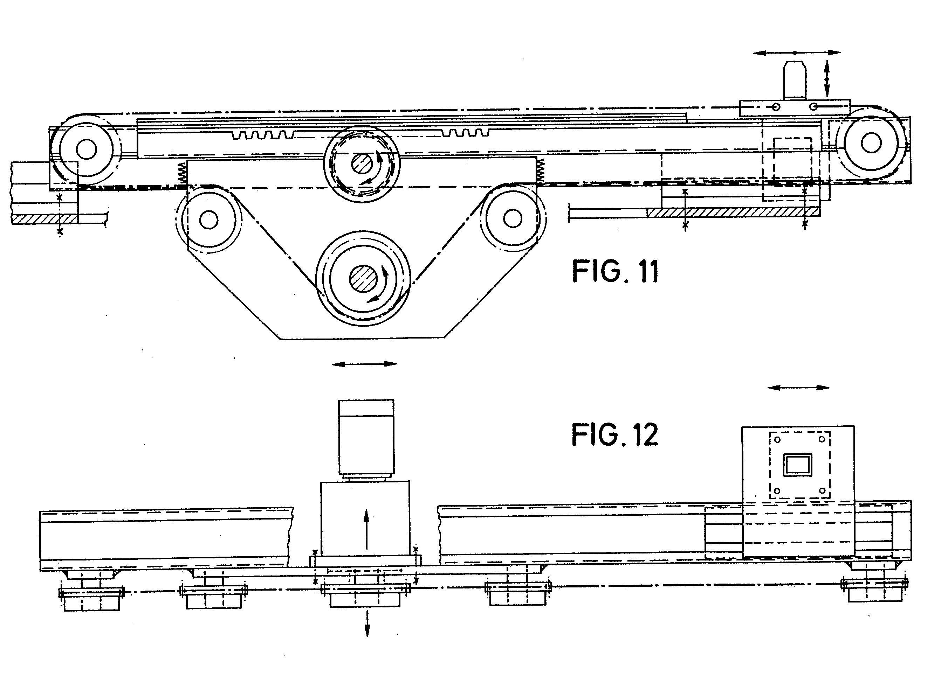

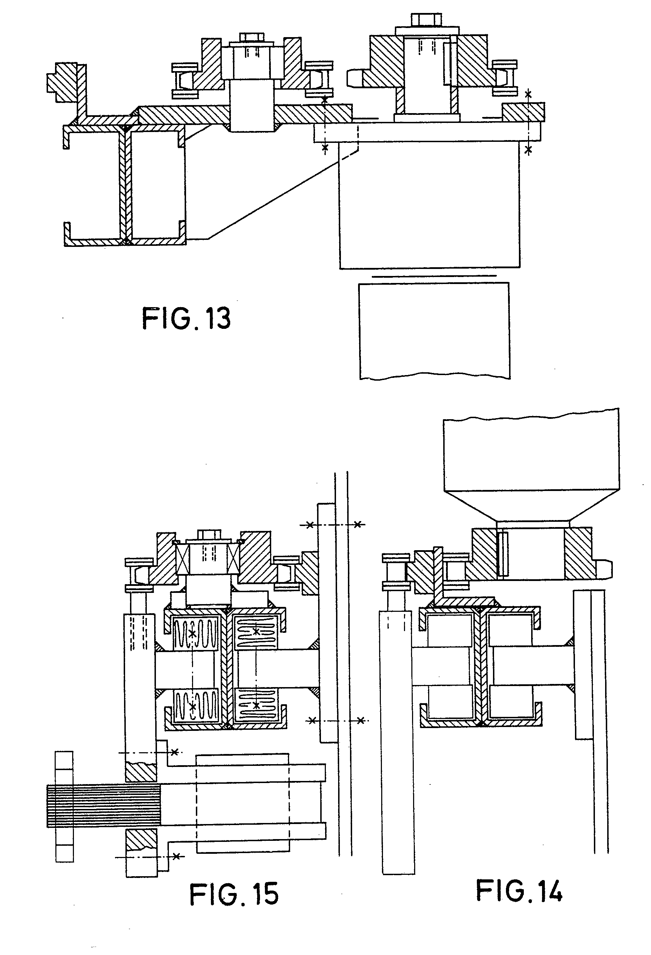

Die Figuren 11 und 12 veranschaulichen eine besonders vorteilhafte Konstruktion eines Kettenantriebes für ein beiderseitiges Verfahren eines Schlittens sowie eines Dornes, und die Figuren 13 bis 15 veranschaulichen vorteilhafte konstruktive Gestaltungen von Lagern und Führungen.

Die gesamte elektrische Steuerung ist, wie im Zusammenhang mit Figur 17 bereits erläutert wurde, in einem Schaltschrank 29 untergebracht und wird mit dem Regalbediengerät mitgeführt. Der Schaltschrank ist in Bodennähe so angebracht, daß er leicht zugänglich ist. Die Steuerung hat alle Überwachungs- und Sicherheitseinrichtungen zu umfassen. Alle Bewegungsabläufe können handgesteuert werden, je nach Bedarf aber auch teilweise oder vollständig automatisiert werden.

Die Figuren 22 bis 24 veranschaulichen die Konstruktion einer Lagerumlaufpalette 18, die sowohl aus Stahl, als auch aus Leichtmetall oder auch, gemäß Figur 24, aus Holz bestehen kann. Wesentlich ist, daß brettfömige Flachteile an der Oberseite vollständig eben sind und daß die nach unten ragenden Fahrschienen vorzugsweise aus U-Profilen gebildet sind, die nach außen hin öffnen, wie Figur 22 vermittelt. Die Fahrschienenaufkantung 70, gemäß Figur 23, ist länger gewählt als die Einweiskante 71, gemäß Figur 22. Bei dem dargestellten Ausführungsbeispiel besitzt die Palette eine angeschweißte Öse bzw. einen Bügel 72. Ein solcher Bügel, eine Öse oder ein entsprechendes Loch sind an jedem Ende vorgesehen und sie dienen zum Eingreifen des Dorns der betreffenden Übergabevorrichtung.

Figur 21 veranschaulicht in zwei etwas unterschiedlichen Ausführungen von Lagerumlaufpaletten deren Stellung in zwei übereinanderliegenden Regalstellen. Hiernach sind mit Abstand übereinander Lagerbolzen 73, vorteilhaft mit an den Enden angebrachten Laufrollen, an Regalstehern 74, 75, sogenannten Leitern, von Regalgerüsten angebracht. Wie oben beschrieben, kann die Lagerumlaufpalette 18 auf diesen Rollen laufend in das Regal eingeschoben werden. Damit die Lagerumlaufpalette in richtiger Stellung gehalten wird, ist auf der einen Seite ein Anschlag 76 und auf der anderen Seite ein federnder Riegel 77 vorgesehen, und zwar an jedem Steher wechselseitig, wie Figur 29 veranschaulicht. Figur 25 und 26 zweigen eine konstruktive Ausführung des Anschlages zwischen Lagerumlaufpalette und Regalsteher, während die Figur 27 und 28 eine Riegelkonstruktion darstellen.

Außer dieser Anschlag- und Riegelhalterung kann auch noch eine weitere Vorkehrung getroffen werden, um die Lagerumlaufpaletten sicher im Regal zu halten, nämlich man kann nach dem oberen Teil der Figur 21 beiderseitig der U-Profile der Lagerumlaufpalette anliegende Laufrollen 78, 79 vorsehen, und zwar beidseitig und, erforderlichenfalls auch mehrfach, in Längsrichtung der Lagerumlaufpalette je Lagerstelle. Auf diese Weise wird ein Abkippen von Lagerumlaufpaletten mit ungleichmäßig verteilter Last verhindert. Wie Figur 21 ferner deutlich macht, wird das Stückgut meist nicht unmittelbar auf der Lagerumlaufpalette aufgesetzt, sondern unter Zwischenschaltung anderer an sich üblicher Paletten, wie z.B. einer bekannten Poolpalette, die so eingerichtet ist, daß die oben beschriebenen Teleskopgabeln 64, 65 quer unter diese Palette greifen können.

Das zu Anfang erläuterte Prinzip der vorliegenden Erfindung läßt sich besonders günstig bei entsprechend ausgebildeten Regalen anwenden, bei Regalen also, die auf die besondere Stückgutverteilung und Art der Beladung der Lagerumlaufpaletten abgestimmt sind. Derartige Regale sind in den Figuren 18, 19 und 30 bis 32 dargestellt. Danach werden jeweils zwei oder mehrere Regalleiterhälften bei Montage zusammengeschraubt und aufgerichtet am Boden abgestellt. Die vorbeschriebenen Anschlagwinkel sind versetzt jeweils an einen U-förmigen Mittelstiel angebracht. Nach dem Ausrichten werden die über dem zweiten Profil hinwegragenden Anschlagwinkel mit diesem verschweißt und wirken als Verbindungslaschen (Figur 30).

Die Lagerbolzen sind versetzt an den Stielen bzw. Stehern befestigt, so daß resultierende der vertikalen Einzelkräfte durch die Steherachse geht. Die einzelnen Außenstiele werden bei gleichbleibender Breite nach oben im Querschnitt vermindert (Figur 30). Die Verbände sind fest eingeschweißt. In der Horizontalen sind Bohrungen für den sogenannten Horizontalverband vorgesehen. Eine Anzahl längslaufender Winkel wird mit den Horizontalen der Regalleitern verschraubt. Dadurch ergibt sich ein gegenseitiges Abstützen.

Wie insbesondere die Figuren 30 und 31 verdeutlichen, werden im Bodenfundament in Regallängsrichtung entsprechend dem Abstand der Steher längslaufende Rillen von einigen cm Tiefe ausgespart. Jeder Regalstiel hat eine kräftige Fußplatte mit zwei Bohrungen. Bei der Montage werden mit dem Kopf nach unten in diese Bohrungen Schrauben eingeschraubt und die Fußplatte zwischen zwei Gegenmuttern gehalten. Die Schraubenköpfe stehen in den vertieften Rillen. Die Regalständer sind mit den Gegenmuttern sehr leicht in der Höhe zu justieren. Nach dem genauen Ausrichten des ganzen Regales werden die Fußplatten, einschließlich der Rillen, ausgegossen, und zwar beispielsweise mit Beton. Der nachträglich ausgegossene Betonstreifen verzahnt sich mit den Rillen im Boden und verhindert auch bei großen Stößen ein Verschieben des Regales.

Am Regalende, bei sehr langen Regalen an beiden Regalenden, wird zur Aufnahme der mit den Längswinkeln eingeleiteten Kräfte eine turmartige, nach allen Richtungen versteifte Konstruktion errichtet und auf Zug und Druck mit dem Boden verankert.

Die Regale können zu einer Materialflußanlage zu sammengebaut bzw. ergänzt werden. Zur vollen Ausnutzung der Möglichkeiten, die das erfindungsgemäße Prinzip bietet, können also außer den Regalen und dem diese beschickenden Regalbediengerät auch Rollenböcke, Kettenförderer (Figur 20) sowie Verschiebewagen vorgesehen werden. Die Figuren 2, 18 bis 20 und 40 veranschaulichen Möglichkeiten für einen bevorzugten Materialfluß, und zwar entsprechend den Pfeilangaben.

Zur Materialflußanlage mit Rollenböcken, Kettenförderen und Verschiebewagen sei noch folgende Erläuterungen hinzugefügt. Rollenböcke dienen außerhalb des Regales zum Längstransportieren von Lagerumlaufpaletten. Derartige Rollenböcke sind beispielsweise in Figur 2 mit dem Bezugszeichen 82 und 83 versehen. Der Aufbau eines solchen Rollenbockes ist ähnlich dem eines Regalfachunterteiles gemäß Figur 18, 19 bzw. 30, 31, d.h. ein Rollenbock steht auf Fußplatten 84 (Figur 18, 19), die fest am Boden befestigt sind. Auf ihnen sind Steher 85 aufgesetzt, welche in einer bestimmten Fachhöhe die Lagerbolzen 86 und Führungsrollen 87, 88 tragen.

Die Steher sind mit Querverbindungen 89 und Diagonalen 90 zu einem stabilen Bock verbunden. Die einzelnen Böcke können je nach den gegebenen Verhältnissen jeder für sich hintereinander am Boden abgestellt werden, so daß sich eine fortlaufende Strecke ergibt. Die Abstände richten sich ungefähr nach den Regalachsen. Wenn sich keine Paletten auf den Rollenböcken befinden, sind die Durchgangswege frei.

Die Rollenböcke können alternativ so ausgebildet werden, daß sich mehrere Lagerumlaufpaletten nebeneinander und/oder übereinander transportieren lassen, wie im rechten Teil der Figur 18 schematisch angedeutet ist.

Die Materialflußanlage umfaßt vorteilhafterweise auch Kettenförderer 91, wie sie z.B. in den Figuren 20 in Draufsicht mit Darstellung des Konstruktionsprinzips und in den Figuren 42 mit Darstellung der Art der Anwendung gezeigt sind. Ein Kettenförderer dient zum Quertransport der Lagerumlaufpaletten. Je nach Palettenlänge ist eine entsprechende Anzahl von Kettensträngen, z.B. drei Kettenstränge 92 gemäß Figur 20 oder vier Kettnstränge 93 gemäß Figur 2 vorgesehen. Die Abstände der Kettenstränge voneinander entsprechen etwa dem Regaltiefenraster, während die Längsteilung genau dem Regallängsraster angepaßt ist. Es empfiehlt sich, sogenannte Buchsenförderketten mit aufgeschweißten Trag- und Führungsrollenböckchen zu verwenden. Die Teilung der Buchsenförderkette ist ein ganzzahliger Teil des Längsrastermaßes, ebenso ist die Kettenlänge ein ganzzahliges Vielfaches des Rasters. Die Kettenrückführung erfolgt mit zwei längslaufenden Winkeln, die starr am Gestell befestigt sind und die gewendeten Rollenböckchen über der gesamten Länge abstützen. Die Förderkette hängt im Rollenböckchenabstand entsprechend dem Regalraster zwischen den Winkeln frei durch. Wenn das Rastermaß zu groß ist oder eine sehr schwere Kette verwendet wird, ist die Förderkette mit zusätzlichen Böckchen abgestützt. Die Stützböckchen besitzen keine Rollen und werden in Zwischenabständen auf die Förderkette aufgeschweißt. Die Kettensterne der Kettenförderer weisen wegen des Polygoneffektes eine ausreichende Anzahl von Zähnen auf und sind jeweils auf eine gemeinsame Welle 94 aufgesetzt. Eine der beiden Wellen wird mit einem Antrieb 95 verbunden, und zwar diejenige Welle, die in Förderrichtung entsprechend den Pfeilen 96 vornliegt. Neben jedem Kettenstern 97 ist eine Lagerstelle 98 vorgesehen. Zweckmäßig erhält die nichtangetriebene Welle die zeichnerisch im einzelnen nicht dargestellten Spannvorrichtungen für die Ketten. Im einzelnen wird hierzu auf die Figuren 33 bis 36 verwiesen.

Das Gestell des Kettenförderers muß die jeweilige Kette und die darauf befindliche Lagerumlaufpalette mit Last tragen und außerdem den Kettenzug aufnehmen. Gemäß dem in den Zeichnungen dargestellten Ausführungsbeispiel ist eine kräftige Schweißkonstruktion vorgesehen, bei welcher die genaue Höhenjustierung mittels Ankerschrauben erfolgt, wobei die Fußplatten des Gestelles mit Gegenmuttern leicht in der Höhe verstellt werden können. (Figur 35) Auf einen längslaufenden Breitflanschträger wird ein ungleichschenkliger Winkel aufgesetzt, der die Kette nach einer Richtung abstützen kann. Der aufgerichtete Schenkel wird immer in Bewegungsrichtung der Lagerumlaufpalette gesehen, hinter der Förderkette angebracht, damit die durch den Rollenaufbau sehr hohe Kette bei schweren Lasten und großer Kettenlänge nicht umgeworfen werden kann. Je nach Bewegungsrichtung der Lagerumlaufpaletten wechselt dieser Schenkel von rechts nach links innerhalb eines Kettenstranges, wie in Figur 20 mit den Bezugszeichen 99 und 100 angedeutet ist. Die Verwendung von Winkeln hat gegenüber U-Profilen den Vorteil der leichteren Sauberhaltung, da eine Führung der Kette in U-Profilen zur Folge haben würde, daß die Kette über Schmutzreste laufen und infolgedessen stark verschleißen würde. Man kann auch zur weiteren Führung der Buchsenförderketten zusätzliche Flachstahlschienen anbringen, auf der die Rollen der Kette laufen. Diese Flachstahlschienen können je nach Verschleißzustand leicht auswechselbar angebracht sein. Damit die Lagerumlaufpaletten bei der Aufgabe und beim nachfolgenden Quertransport nicht selbstständig vor oder zurücklaufen können, wird am äußeren Palettenende über die gesamte Kettenförderlänge ein kräftiger Anschlagwinkel 101 am Gestell des Kettenförderers angebracht. An der anderen Längsseite ist ein entsprechender, jedoch kürzerer Anschlagwinkel 102 angebracht, der an den Enden mit schrägen Einweisern für einen stoßfreien Einlauf und Transport versehen ist und welcher zu beiden Enden die Aufgabe- und Abgabestrecke 103 bzw. 104 freiläßt.

Außer den Rollenböcken und Kettenförderern können im Rahmen der Materialflußanlage noch Verschiebewagen vorgesehen werden, ebenso den Ein- bzw. Auslaufstrecken vorgesetzte feststehende Kräne, die das Stückgut von Lastkraftwagen übernehmen und auf Lagerumlaufpaletten setzen. Statt oder in Ergänzung zu feststehenden Kränen können auch noch fahrbare Brückenkräne aufgebaut werden. Aus Figur 40 ersieht man ein Ausführungsbeispiel für mögliche Platzverhältnisse.

Nach der vorausgegangenen Zeichnungsbeschreibung sie nachfolgend noch eine generelle Beschreibung zur Bedienung des erfindungsgemäßen Warenlagers und zur Wirkungsweise angefügt. Die Einlagerung ganzer Lagerumlaufpaletten erfolgt in der Weise, daß die Lagerumlaufpaletten an vorbestimmten Stellen in bzw. vor dem betreffenden Regal mittels der Übergabevorrichtung des Hubschlittens des Regalbediengerätes auf dessen Bühne gezogen und nach dem Anfahren zu freien Plätzen bzw. Lagerstellen im Regal geschoben werden. Bei dem zeichnerisch dargestellten Ausführungsbeispiel werden zweckmäßigerweise zwei Lagerumlaufpaletten entweder einzeln nacheinander oder vorteilhafterweise gleichzeitig auf die Bühne, und zwar auf die beiden Fördervorrichtungen 14, 15 (Figur 2) gezogen. Die Auslagerung ganzer Lagerumlaufpaletten erfolgt in der Weise, daß zwei gewünschte Fächer bzw. Lagerstellen im Regal nacheinander mit dem Regalbediengerät angefahren werden und mit Hilfe der Übergabevorrichtungen wird jeweils eine Lagerumlaufpalette auf eine der beschriebenen Rollenstrecken der Bühne gezogen. Nach dem Anfahren einer Abgabestelle werden die Lagerumlaufpaletten gleichzeitig oder nacheinander entsprechend abgeschoben.

Zum Kommissionieren ganzer Stückguteinheiten wird eine leere Lagerumlaufpalette auf eine der Fördervorrichtungen 14 bzw. 15 (Figur 2) der Bühne mitgeführt und die zu kommissionierenden Stückguteinheiten werden dann nacheinander von der einen Lagerumlaufpalette auf die parallel stehender Lagerumlaufpalette gezogen, und zwar erfolgt dies mit Hilfe des zwischen den Fördervorrichtungen angeordneten fahrbaren Hubtisches. Die Teleskopgabeln werden unter die bestimmte Stückguteinheit geschoben, der Hubtisch kurz angehoben und die Gabeln mit der darauf befindlichen Stückguteinheit in die Mittellage des Hubtisches eingezogen. Der Hubtisch wird nunmehr, zusammen mit der Stückguteinheit, vor eine freie Stelle der gegenüberliegenden leeren Lagerumlaufpalette gefahren und die Teleskopgabeln im noch angehobenen Zustand nach dieser hin ausgefahren, abgesenkt und eingezogen. Die angebrochene gzw. zum Teil geleerte Lagerumlaufpalette kann anschließend nach dem Abnehmen einer oder mehrerer Stückguteinheiten wieder in das Regalfach zurückgeschoben werden. Das Zurückschieben kann auch schon dann erfolgen, wenn die letzte Stückguteinheit sich noch auf dem Hubtisch befindet. Dieser beschriebene Vorgang kann solange mit verschiedenen aus dem Regal herauszuziehenden Lagerumlaufpaletten fortgesetzt werden, bis die betreffende leere Lagerumlaufpalette als kommissionierte Lagerumlaufpalette gefüllt ist. Danach wird diese an eine vorbestimmte Auslagerungsstrecke des Warenlagers gebracht und dorthin abgeschoben.

Durch die Erfindung ist es auch möglich, ein Kommissionieren aus Stückguteinheiten durchzuführen, und zwar kann eine Stückguteinheit aus zahlreichen kleineren Einzelgegenständen bestehen, z.B. aus einem Behältnis, das zahlreiche gleichartige Einzelgegenstände enthält. In diesem Falle wird die verlangte Ware, die sich in einem bekannten Fach bzw. auf einer bekannten Lagerstelle des Regales befindet, mit dem Regalbediengerät angefahren. Die Lagerumlaufpalette wird auf die steuerstandsseitige Rollenstrecke des Hubschlittens gezogen Zusätzlich zu den Fördervorrichtungen 14, 15 können auf der Bühne leere oder halbvolle Behälter aufgestellt werden, die sich in Reichweite der Bedienungsperson befinden. Die Bedienungsperson greift dann in die entsprechende Stückguteinheit und entnimmt mit der Hand die geforderte Menge der Einzelgegenstände und legt diese in einen der bereitstehenden Behälter. Die Stückguteinheit als solche bleibt auf der betreffenden Lagerumlaufpalette stehen und wird danach sofort wieder nach entsprechender Abbuchung in das Regal zurückgeschoben. Zur schnelleren Abwirklung dieser vorerläuterten Handhabung ist es nicht in allen Fällen erforderlich, daß die Lagerumlaufpalette vollständig aus dem Regal herausgezogen wird, vielmehr braucht die Lagerumlaufpalette jeweils nur soweit aus dem Regal auf die Bühne gezogen zu werden, als dies zur Erreichung der benötigten Waren durch die Hand der Bedienungsperson erforderlich ist.

Zur Materialflußanlage des erfindungsgemäßen Warenlagers sei noch folgende Erläuterung gemacht. Bei einer zweischiffigen Halle, z.B. gemäß Figur 2 oder 40 werden die Lagerumlaufpaletten bzw. die kommissionierten Lagerumlaufpaletten mittels des Regalbediengerätes auf einen oder auf mehrere als Auslagerungsstrecken definierte Plätze ins Regal geschoben. Vorzugsweise liegen diese Strecken in Arbeitshöhe. Mittels einer weiteren entsprechenden Übergabevorrichtung oder mit einer angetriebenen Rollenbahn bzw. mit Rollenböcken 82, 83 wird die betreffende Lagerumlaufpalette auf einen jeweiligen Kettenförderer 91 geschoben. Auf diesem Kettenförderer wird die Lagerumlaufpalette z.B. in den in den Zeichnungen dargestellten Pfeilrichtungen vorgetaktet. Am Ende des betreffenden Kettenfördersers wird die Laterumlaufpalette wieder auf einen entsprechenden Rollenbock gezogen und damit der vordere Platz am Kattenfördere frei gemacht, so daß die nachfolgende Laterumlaufpalette vorgetaktet werden kann. Die Stückgüter können mit Kraneinrichtungen schon auf den Kettenförderplätzen entnommen werden oder mittels Gabelstaplern bzw. entsprechenden fahrbaren Hubtischen vom letzten Platz des Kettenförderers oder von dem Rollenbock abgenommen werden.

Das Beladen der Lagerumlaufpaletten erfolgt je nach den örtlichen Gegebenheiten auf einer Rollenstrecke oder einem Rollenbock oder direkt auf einem äußeren Platz eines Kettenförderers. Wenn aufgrund der örtlichen Gegebenheiten die betreffende Zubringerstrecke, die z.B. aus der Produktion eines Herstellerwerkes kommt, nicht an die Außenseite, sondern bespielsweise an die Innenseite des Kettenförderers heranführt, so kann in entsprechend umgekehrter Richtung entlang der Rückfahrstrecke bzw. der Einlagerungsstrecke beladen werden. Nach diesem Einlagerungsvorgang können die Lagerumlaufpaletten über Rollenstrecken und/oder Kettenförderer in nebenstehende Regalfächer gefahren und zur Aufnahme durch das Regalbediengerät bereitgestellt werden. Leergebliebene oder sonstige Lagerumlaufpaletten können auch gewissermaßen im Kreisverkehr über den betreffenden Kattenförderer umgeleitet und wiederholt vor die Be- und Entladestellen gebracht werden.

Es versteht sich, daß sinngemäß die glechen Vorgänge auch bei einschiffigen Hollen vorgenommen werden können, und zwar unter Verwendung von Kettenförderern und/oder Verschiebewagen. Bei Verwendung von Verschiebewagen werden die Lagerumlaufpaletten je nach Länge vom Regalbediengerät nach rechts oder links abgegeben. Verschiebewagen und Regalbediengeräte können so verfahren werden, daß jeder Platz erreichbar ist. Der Verschiebewagen wird von einem freien ortsfesten Steuerstand abberufen und danach gegebenenfalls von Hand vor eine entsprechende Rollenbockstrecke gefahren. Die Lagerumlaufpaletten können sodann nacheinander von Verschiebewagen abgezogen und auf parallelen Rollenstrecken entladen und wieder beladen werden, um in umgekehrter Folge wieder ins Regal zu gelangen. Bei dieser Art der Anlage erfolgt der Zutransport zweckmäßigerweise an den Außenseiten der Halle und der Abtransport von Stückguteinheiten in der Hallenmitte.

Alternativ zeigen die Figuren 37 bis 39 noch eine besondere Ausgestaltung einer Lagerumlaufpalette 79, die zum Einordnen beispielsweise von plattenartigem Material 80 dient. Zu diesem Zweck besitzt die Lagerumlaufpalette im mittleren Bereich ein längsverlaufendes spitzes Dach 81, dessen Teile am oberen Ende untereinander und am unteren Ende mit nach innen leicht geneigten Palettenteilen verbunden sind.

Figur 41 zeigt verschiedene Möglichkeiten für die Ausbildung von Regalen zu beiden Seiten einer Gasse und die Figure 42a, 42b und 42c sollen verdeutlichen, welche unterschiedlichen Stückgüter sowohl auf einer Lagerumlaufpalette als auch auf den Paletten untereinander untergebracht werden können.

Die Figuren 43 bis 45 verdeutlichen, daß jede Lagerumlaufpalette 18 mit dem darauf befindlichen Stückgut 19 als Ladeeinheit auf Rollenbahnen 106 und 107 sowohl innerhalb des Warenlagers bzw. einer Rampe 105 des Warenlagers als auch auf Fahrzeugen 108 außerhalb des Warenlagers gefördert werden kann. Es versteht sich, daß die Lagerumlaufpalette nicht nur reihenweise hintereinander angeordnete Stückgüter, sondern auch Langgüter, wie Stangen, Profile und dergleichen aufnehmen kann.

## Patentansprüche

1. Warenlager zur Lagerung von Stückgütern, mit mindestens einem Regal (4, 5), welches nebenund übereinander angeordnete Lagerstellen fü die Stückgüter (19) aufweist, sowie mit mindestens einem Regalbediengerät (6), welches zu den Lagerstellen verfahrbar und zum Be- und Entladen der Lagerstellen mit den auf Palatten (18) ruhenden Stückgütern (19) eingerichtet ist, wobei das Regalbediengerät (6) mindestens eine in Richtung senkrecht zur Regalfront bewegliche Fördervorrichtung (14, 16) aufweist, dadurch gekennzeichnet, daß jede Lagerstelle eine Tiefe zur Aufnahme einer Reihe von Stückgütern (19) aufweist, daß der Fördervorrichtung (14, 16) mindestens ein zusätzlicher Querförderer (17) zugeordnet ist, der zur Entnahme eines Stückgutes aus der an der Lagerstelle herausgezogenen Stückgutreihe dient, wobei die die Stückgüter tragenden Paletten (18) in ihrer Länge der Tiefe des Regals entsprechen.

2. Warenlager nach Anspruch 1, dadurch gekennseichnet, daß jede Palette (18) mit dem darauf befindlichen Stückgut (19) als Ladeeinheit derart eingerichtet ist, daß sie auf Rollenbahnen (40; 106, 107) sowohl innerhalb des Warenlagers als auch auf Fahrzeugen (108) außerhalb des Warenlagers förderbar ist.

3. Warenlager nach Anspruch 1 oder 2, dadurch gekennzeichnet, daß das Regalbediengerät (6) mindestens zwei mit Abstand voneinander angeordnete Fördervorrichtungen (14, 16) aufweist, und daß der Querförderer (17) zwischen diesen beiden Fördervorrichtungen vorgesehen ist.

4. Warenlager nach einem der Ansprüche 1 bis 3, dadurch gekennzeichnet, daß das Regalbediengerät (6) mittels Fahrrollen auf einer am Boden befestigten Fahrschiene (7) bodenfahrend ausgebildet und am oberen Ende an einer an der Dachkonstruktion (9, 9a) befistigten Führungsschiene (8) geführt ist.

5. Warenlager nach einem der vorhergehenden Ansprüche, dadurch gekennzeichnet, daß das Regalbediengerät (6) einen Rahmen (20), einen Fahrschemel (27, 28), einen Hubschlitten (13) und ein Hubwerk (12) aufweist.

6. Warenlager nach Anspruch 5, dadurch gekennzeichnet, daß der Rahmen (20) des Regelbediengerätes (6) aus einem Hauptmast (21), einem Hilfsmast (22), einem Fahrträger (23) und einem Kopfträger (24) besteht.

7. Warenlager nach Anspruch 6, dadurch gekennzeichnet, daß der Hauptmast (21) eine Konsolenkonstruktion zur Aufnahme des Hubwerks (12) trägt, daß außen eine Platte (26) zum Aufschrauben des Fahrschemels (27, 28) angebracht ist und daß an dem Hilfsmast (22) ein Schaltschrank (29) für die elektrische Versorgung des Regalbediengerätes (6) angeordnet ist.

8. Warenlager nach den Ansprüchen 6 und 7, dadurch gekennzeichnet, daß auf den Innenseiten der beiden Maste (21, 22) vertikale Aufzugschienen als Führung für den Hubschlitten (13) sowie für eine Hubschlitten-Fangvorrichtung angeordnet sind.

9. Warenlager nach einem der Ansprüche 5 bis 8, dadurch gekennzeichnet, daß der Hubschlitten (13) eine Bühne mit zwei parallel und mit Abstand voneinander verlaufenden Rollenstrecken (40) als Fördervorrichtungen für die Aufnahme je einer Palette (18) aufweist, und daß zu jeder Rollenstrecke eine Übergabevorrichtung mindestens einseitig nach einem Regal hin vorgesehen ist.

10. Warenlager nach den Ansprüchen 1 und 9, dadurch gekennzeichnet, daß zwischen den Rollenstrecken (40) ein Hubtisch über die Bühnenbreite bewegbar ist, der Teil des Querförderers (17) ist.

11. Warenlager nach Anspruch 10, dadurch gekennzeichnet, daß der Hubtisch mit Teleskopgabeln (64, 65) ausgestattet ist, welche unter je eine Stückguteinheit schiebbar eingerichtet sind.

12. Warenlager nach einem der Ansprüche 9 bis 11, dadurch gekennzeichnet, daß die Bühne ein ortsfestes Steuerpult (50) sowie Platz (51) für eine Bedienungsperson zum Hand- oder teilwise automatischen Steuern aller Bewegungen aufweist.

13. Warenlager nach Anspruch 9, dadurch gekennzeichnet, daß die Palette (18) auf der Oberseite ebenflächig ausgebildet ist und auf der Unterseite Fahrschienen, vorzugsweise nach außen öffnende U-Profile (69), besitzt, welche von den Rollenstrecken des Hubschlittens in den Lagerstellen (73) des Regals verfahrbar getragen sind.

14. Warenlager nach Anspruch 13, dadurch gekennzeichnet, daß jede Palette (18) an den Längskanten und im mittleren Bereich einen Federriegel (77) und ein Anschlagstück (76) zur Halterung in Ruhelage, insbesondere in den Lagerstellen des Regals, aufweist, welche mit entsprechenden Bauteilen des Regalmittelstehers (74, 75) zusammenwirken.

15. Warenlager nach Anspruch 13, oder 14, dadurch gekennzeichnet, daß jede Palette (18) an beiden Enden je eine Öse (72) oder ein Loch für den Angriff der mit einem Dorn versehenen Übergabevorrichtung aufweist.

**Revendications**

1. Magasin pour le stockage de marchandises de détail qui comporte au moins un rayonnage (4, 5) présentant des emplacements disposés côte à côte et superposés, devant recevoir les marchandises (19), et qui comporte au moins un appareil de commande (6) du rayonnage déplaçable vers les emplacements de stockage et conçu pour le chargement et le déchargement des emplacements de stockage avec les marchandieses (19) reposant sur des palettes (18), l'appareil de commande (6) du rayonnage étant muni d'au moins un dispositif transporteur (14, 16) mobile dans une direction perpendiculaire au fond du rayonnage, magasin caractérisé en ce que chaque emplacement de stockage a une profondeur lui permettant de recevoir une série de marchandises de détail (19), en ce que le dispositif transporteur (14, 16) est équipé d'au moins un transporteur transversal supplémentaire (17) servant à retirer une marchandise de la série extraite à l'emplacement de stockage, les palettes (18) porteuses des marchandises ayant une logueur égale à la profondeur de rayonnage.

2. Magasin selon la revendication 1, caractérisé en ce que chaque palette (18), avec la marchandise (19) qu'elle porte, est aménagée en tant qu'unité de chargement de telle façon qu'elle est transportable sur des transporteurs à rouleaux (40; 106, 107) aussi bien à l'intérieur du magasin que, sur des véhicules (108), à l'extérieur du magasin.

3. Magasin selon l'une des revendications 1 et 2, caractérisé en ce que l'appareil de commande (6) du rayonnage comporte au moins deux dispositifs transporteurs (14, 16) placés à une certaine distance l'un de l'autre, et en ce que le transporteur transversal (17) est prévu entre ces deux dispositifs transporteurs.

4. Magasin selon l'une quelconque des revendications 1 à 3, caractérisé en ce que l'appareil de commande (6) du rayonnage est conçu de manière à pouvoir être déplacé au sol, au moyen de rouleaux transporteurs, sur un rail de roulement (7) fixé au sol, et est guidé, à la partie supérieure, par un rail conducteur (8) fixé à la construction de toit (9, 9a).

5. Magasin selon l'une quelconque des revendications précédentes, caractérisé en ce que l'appareil de commande (6) de rayonnage comporte un chasis (20), un escabeau roulant (27, 28), un chariot élévateur (13) et un dispositif de levage (12).

6. Magasin selon la revendication 5, caractérisé en ce que le chassis (20) de l'appareil de commande (6) du rayonnage est constitué d'un mat principal (21), d'un mat auxiliaire (22), d'une poutrelle de roulement (23) et d'un sommier (24).

7. Magasin selon la revendication 6, caractérisé en ce que le mat principal (21) porte une construction en console devant recevoir le dispositif de levage (12), en ce qu'à l'extérieur est montée une palette (26) pour le vissage de l'escabeau roulant (27, 28), et en ce qu'une armoire de distribution (29) est montée sur le mat auxiliaire (22) pour l'alimentation en électricité de l'appareil de commande (6) du rayonnage.

8. Magasin selon l'une des revendications 6 et 7, caractérisé en ce que, sur les côtés intérieurs dex deux mats (21, 22) sont installés des rails verticaux d'ascension servant de guides pour le chariot élévateur (13) ainsi que pour un dispositif d'arrêt du chariot élévateur.

9. Magasin selon l'une quelconque des revendications 5 à 8, caractérisé en ce que le chariot élévateur (13) a une plateforme à deux lignes de rouleaux (40) qui sont parallèles l'une à l'autre et à une certaine distance l'une de l'autre, comme dispositifs transporteurs pour la réception d'une palette (18) à chaque fois, et en ce que chaque ligne de rouleaux comporte, au moins d'un côté, un dispositif de transfert vers un rayonnage.

10. Magasin selon l'une des revendications 1 et 9, caractérisé en ce qu'il comporte, entre les lignes de rouleaux (40), une table élévatrice mobile sur la largeur de la plateforme, table qui fait partie du transporteur transversal (17).

11. Magasin selon la revendication 10, caractérisé en ce que la table élévatrice est équipée de fourches télescopiques (64, 65) qui peuvent, en coulissant, venir se placer à chaque fois sous une unité de marchandise.

12. Magasin selon l'une quelconque des revendications 9 à 11, caractérisé en ce que la plateforme comporte un pupitre de commande (50) monté à demeure ainsi qu'une place (51) pour un servant dont le rôle est de commander, manuellement ou, en partie, automatiquement, tous les mouvements.

13. Magasin selon la revendication 9, caractérisé en ce que la palette (18) a une face supérieure plane et présente, sur sa face inférieure, des rails de roulement, de préférence des profilés en U (69) s'ouvrant vers l'extérieur, qui sont portés de manière à assurer le transport par les lignes de rouleaux de chariot élévateur dans les emplacements de stockage (73).

14. Magasin selon la revendication 13, caractérisé en ce que chaque palette (18) est munie, sur ses arêtes longitudinales et dans sa région médiane, d'un dispositif de verrouillage à ressort (77) et d'une pièce formant butée (76), pour le maintien dans la position de repos, en particulier dans les emplacements de stockage du rayonnage, dispositif et pièce qui coopèrant avec des parties correspondantes de la partie médiane du rayonnage (74, 75).

15. Magasin selon l'une des revendications 13 et 14, caractérisé en ce que chaque palette (18) est munie, à chacune de ses deux extrémités, d'une boucle (72) ou d'un trou pour la prise par un dispositif de transfert équipé d'un mandrin.

**Claims**

1. Warehouse for storing piece-goods, having at least one shelf (4, 5) with storage spaces for piece-goods (19) arranged laterally and horizontally, and at least one shelf service unit (6), which can be driven to the storage spaces and which is adapted to load and unload the storage spaces with piece-goods (19) resting on pallets (18), the shelf service unit (6) having at least one conveying device which is vertically adjustable to the front of the shelf (14, 15), characterised in that each storage space is deep enough to take a row of piece-goods (19) and in that at least one additional lateral conveyor (17) can be fitted to the conveying device (14, 15) for the selective removal of said piece-goods from a row thereof in the storage space, the pallets (18) bearing the piece-goods corresponding in length to the depth of the shelf.

2. Warehouse as claimed in claim 1, characterised in that each pallet (18) with the piece-good (19) resting thereon is adapted as a loading unit in such a way that it can be conveyed on roller conveyors (40; 106, 107) inside the warehouse as well as on vehicles (108) outside the warehouse.

3. Warehouse as claimed in claim 1 or 2, characterised in that the shelf service unit (6) has at least two spaced conveying devices (14, 16) and in that the lateral conveyor (17) is located between these two conveying devices.

4. Warehouse as claimed in any one of claims 1 to 3, characterised in that the shelf service unit (6) is driven along the ground by means of rollers along rails fixed to the floor (7) and is fitted at the top to a guide rail (8) fixed to the roof (9, 9a).

5. Warehouse as claimed in any of the preceding claims, characterised in that the shelf service unit (6) has a frame (20), a travel carriage (27, 28), a hoist sledge (13) and lifting gear (12).

6. Warehouse as claimed in claim 5, characterised in that the frame (20) of the shelf service unit (6) consists of a main mast (21), an auxiliary mast (22), an undercarraige (23) and headstock (24).

7. Warehouse as claimed in claim 6, characterised in that the main mast (21) has a cantilever arrangement to carry the lifting gear (12), in that a pallet (26) is fitted externally for screwing-on the travel carriage and in that a control panel (29) is fitted on the auxiliary mast (22) for the purpose of supplying power to the shelf service unit (6).

8. Warehouse as claimed in claim 6 and 7, characterised in that on the inside of both masts (21, 22) vertical elevator rails to guide the hoist sledge (13) as well as safety gear for the hoist sledge are located.

9. Warehouse as claimed in any one of claims 5 to 8, characterised in that the hoist sledge (13) includes a platform having two spaced parallel streches of roller conveyor (40) each defining a conveying means for a respective pallet (18) and that for each length of roller conveyor a transfer device is located at least on one side after each shelf.

10. Warehouse as claimed in claims 1 to 9, characterised in that between the lengths of roller conveyors (40) an elevating platform is movable above the width of the platform, which forms part of the lateral conveyor (17).

11. Warehouse as claimed in claim 10, characterised in that the elevating platform is equipped with telescopic forks (64, 65), which can be pushed under each piece-good unit.

12. Warehouse as claimed in any one of claims 9 to 11, characterised in that the platform has a stationary control desk (50) as well as space (51) for one operator for manual or partially automatic operation of all movements.

13. Warehouse as claimed in claim 9, characterised in that the pallet (18) on the upper side has a flat surface and on the lower side rails, preferably with U-sections (69) opening to the outside, which are carried by the roller conveyor lengths of the hoist sledge into the storage spaces (73) of the shelf.

14. Warehouse as claimed in claim 13, characterised in that each pallet (18) on the longitudinal sides and in the middle area has a spring lock (77) and a stop piece (76) to hold in the resting position, in particular in the storage spaces of the shelf, which work together with the relevant structural parts of the middle support stand (74, 75).

15. Warehouse as claimed in claim 13 or 14, characterised in that each pallet (18) has on both ends a lug (72) or a hole for gripping by the transfer device equipped with a pin.

FIG. 1

FIG.1a

FIG. 2

# FIG. 3

FIG. 4

FIG. 5

4

FIG. 6

FIG. 7

FIG. 8

FIG. 9

FIG. 10

FIG. 11

FIG. 12

FIG.13

FIG.15

FIG.14

**FIG. 17**

**FIG. 16 a**

**FIG. 16**

FIG.18

FIG.19

FIG. 20

FIG. 21

FIG. 23          XXIII          FIG. 22          FIG. 24

# 0 029 073

FIG. 25

FIG. 26

FIG. 29

FIG. 27

FIG. 28

## FIG. 30

## FIG. 31

## FIG. 32

FIG. 33

FIG. 34

FIG. 35

FIG. 36

FIG. 37

FIG. 38

FIG. 39

0029073

FIG. 40

FIG. 41

0029073

FIG. 42a

# FIG. 42b

FIG. 42c

FIG. 44

FIG. 43

FIG. 45

0 029 073